(19) Europäisches Patentamt
European Patent Office
Office européen des brevets

(11) Veröffentlichungsnummer: **0 035 685**
**B1**

# (12) EUROPÄISCHE PATENTSCHRIFT

(45) Veröffentlichungstag der Patentschrift: **22.02.84**

(21) Anmeldenummer: **81101287.1**

(22) Anmeldetag: **23.02.81**

(51) Int. Cl.³: **G 03 C 5/54,** C 07 C 161/00, C 07 C 161/06, C 09 B 49/02, C 09 B 29/28

## (54) Photographisches Aufzeichnungsmaterial für Diffusionsverfahren und hierfür geeignete neue nichtdiffundierende Sulfiliminverbindungen.

(30) Priorität: **06.03.80 DE 3008588**

(43) Veröffentlichungstag der Anmeldung: **16.09.81 Patentblatt 81/37**

(45) Bekanntmachung des Hinweises auf die Patenterteilung: **22.02.84 Patentblatt 84/8**

(84) Benannte Vertragsstaaten: **BE CH DE FR GB IT LI**

(56) Entgegenhaltungen: **Keine**

(73) Patentinhaber: **AGFA-GEVAERT Aktiengesellschaft, D-5090 Leverkusen 1 (DE)**

(72) Erfinder: **Credner, Hans-Heinrich, Dr., Steinberg 7, D-8021 Hohenschäftlarn (DE)**
Erfinder: **Lässig, Wolfgang, Dr., Ziehrerstrasse 6, D-8000 München 71 (DE)**
Erfinder: **Schranz, Karl-Wilhelm, Dr., Schillerstrasse 1, D-5068 Odenthel-Hahnenberg (DE)**

**EP 0 035 685 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Photographisches Aufzeichnungsmaterial für Diffusionsverfahren und hierfür geeignete neue nichtdiffundierende Sulfiliminverbindungen

Die vorliegende Erfindung betrifft ein photographisches Aufzeichnungsmaterial mit mindestens einer Silberhalogenidemulsionsschicht, das mindestens eine diffusionsfeste Verbindung enthält, die aufgrund einer Reduktionsreaktion eine diffusionsfähige, photographisch wirksame Verbindung in Freiheit setzt, insbesondere einen diffusionsfähigen Farbstoff für Diffusionsübertragsverfahren.

Die Herstellung photographischer Bilder, insbesondere von Farbbildern, durch Diffusionsübertragsverfahren ist seit langem bekannt, z. B. die Herstellung sogenannter Colorsofortbilder. Die hierfür verwendeten photographischen Aufzeichnungsmaterialien sind im Prinzip insoweit ähnlich aufgebaut, als sie mindestens eine lichtempfindliche Silberhalogenidemulsionsschicht und eine Bildempfangsschicht enthalten. Das Farbbild wird dadurch erzeugt, daß in das Aufzeichnungsmaterial diffusionsfeste, farbgebende Verbindungen eingelagert werden, aus denen nach verschiedenen chemischen Reaktionen bildweise lösliche bzw. diffusionsfähige Farbstoffe oder Farbstoffvorprodukte gebildet werden, die in die Bildempfangsschicht wandern und dort unter Bildung des Farbstoffbildes festgelegt werden.

Da das in der Bildempfangsschicht erhaltene Farbstoffbild im allgemeinen ein positives Bild der Vorlage oder des aufgenommenen Gegenstandes sein soll, muß das photographische Aufzeichnungsmaterial so aufgebaut sein, daß bei der Entstehung des Bildes eine Umkehrung stattfindet. Die Umkehrung kann entweder bei der Belichtung durch Verwendung einer positiv arbeitenden Silberhalogenidemulsion, oder bei der bildweisen Farbstoffbildung, z. B. durch die Wahl geeigneter chemischer Farbstoff oder Farbstoffvorläufer liefender Systeme, erfolgen.

Geht man von den unterschiedlichen Silberhalogenidemulsionstypen aus, die für Farbübertragungsverfahren verwendet werden können, so kann man zwei Gruppen photographischer Farbübertragungsmaterialien unterscheiden, nämlich solche, für die eine positiv arbeitende Silberhalogenidemulsion verwendet wird und andere, die eine negativ arbeitende Silberhalogenidemulsionsschicht enthalten.

Bei Verwendung von positiven Silberhalogenidemulsionen müssen solche Farbstoffsysteme verwendet werden, die an den belichteten Stellen im Verhältnis zu der dort einsetzenden photographischen Entwicklung bildmäßig einen diffusionsfähigen Farbstoff freisetzen. Für diesen Zweck geeignet sind sogenannte DDR-Verbindungen. Farbstoff liefernde Systeme dieser Art sind in GB-A-904 364, US-A-3 227 550, 3 628 952, 3 844 785 und der DE-A-2 317 134 sowie 2 415 125 beschrieben. Mit Hilfe solcher photographischer Materialien gelingt es, farbige Übertragsbilder beachtlicher Qualität herzustellen. Allerdings besitzen Materialien bzw. Verfahren dieser Art gewisse Nachteile, z. B. eine relativ lange Entwicklungszeit und eine verbesserungsbedürftige Stabilität der entstehenden Farbstoffbilder.

Für photographische Farbübertragsmaterialien des anderen Typs, die eine oder mehrere negativ arbeitende Silberhalogenidemulsionen enthalten, sind solche Farbstoff liefernden Systeme erforderlich, die zu einer Umkehrung des Bildes führen, d. h. zunächst diffusionsfeste farbstoffgebende Verbindungen müssen durch die bei der Entwicklung der belichteten Silberhalogenidemulsionsschicht ablaufenden Entwicklungsreaktion oder eine Folgereaktion an den unbelichteten Stellen einen diffusionsfähigen Farbstoff oder ein Farbstoffvorläuferprodukt liefern, das in die Bildempfangsschicht diffundiert und dort ein positives Farbstoffbild der Vorlage bildet.

Farbgebende Verbindungen dieser Art sind z. B. die sogenannten Farbstoffentwicklerverbindungen. Diese Verbindungen sind bei alkalischen pH-Werten, wie sie bei der photographischen Entwicklung vorliegen, löslich und diffusionsfähig; an den Stellen, an denen die Entwicklung stattfindet, reagieren sie mit den Entwickleroxidationsprodukten und werden dadurch in eine diffusionsfeste Form überführt. Verbindungen dieser Art sind z. B. in US-A-2 983 606 und US-A-3 185 567 beschrieben.

Andere Farbstoff liefernde Systeme beruhen auf nichtdiffundierenden oxidierbaren farbgebenden Verbindungen, die eine Bildumkehr bei der Freisetzung des Farbstoffes bewirken und die daher in Kombination mit negativ arbeitenden Silberhalogenidemulsionen verwendet werden können. Derartige Verbindungen sind zunächst diffusionsfest in der Silberhalogenidemulsionsschicht oder einer benachbarten Schicht enthalten. Aufgrund ihrer chemischen Konstitution werden sie bei den alkalischen pH-Werten der photographischen Entwicklung unter Bildung eines diffusionsfähigen Farbstoffes hydrolytisch aufgespalten. Diese Spaltungsreaktion findet nur an den unbelichteten Stellen statt, da an den belichteten Stellen die Verbindungen mittels des Entwickleroxidationsproduktes oxidiert und damit in eine nicht aufspaltbare Form überführt werden.

Verbindungen dieses Typs sind in der DE-A-2 402 900, 2 543 902 und 2 823 159 beschrieben.

Mit derartigen farbgebenden Verbindungen, die aufgrund ihrer Ballastgruppen zunächst diffusionsfest im photographischen Material eingelagert sind, lassen sich eine Reihe von Vorteilen erreichen. Bei den in der DE-A-2 402 900 beschriebenen Verbindungen handelt es sich um solche, die mittels einer sogenannten intramolekularen nucleophilen Verdrängungsreaktion diffusionsfähige photographisch wirksame Verbindungen, insbesondere Farbstoffe oder Farbstoffvorprodukte abspalten.

Ein anderes Farbstoff lieferndes System, das zu einer Umkehrung des Bildes führt und damit mit negativ arbeitenden Silberhalogenidemulsionen kombiniert werden kann, umfaßt nichtdiffundierende reduzierbare farbgebende Verbindungen. Diese liegen diffusionsfest durch Substitution mit Ballastgruppen als oxidierter oder allgemeiner gesagt reduzierbarer Verbindungstyp vor. Sie reagieren weder direkt noch indirekt mit oxidierenden Substanzen, z. B. dem Oxidationsprodukt des Entwicklers, so daß

an den belichteten Stellen im wesentlichen kein Farbstoff freigesetzt wird. Sie sind jedoch reaktionsfähig gegenüber reduzierenden Verbindungen, z. B. durch direkte oder vorzugsweise indirekte Reaktion mit unverbrauchtem photographischem Entwickler, der an den unbelichteten Stellen verfügbar ist. Als Folge der Reduktion werden diese Verbindungen so gespalten, daß eine diffusionsfähige, photographisch wirksame Verbindung, insbesondere Farbstoffe oder Farbstoffvorprodukte liefernde Verbindungen, freigesetzt werden, die dann in die Bildempfangsschicht diffundieren und dort festgelegt werden.

Als besonders bevorzugte Ausführungsform werden die zuletzt genannten Verbindungen in Kombination mit einer Elektronendonorverbindung (ED-Verbindung) oder Elektronendonor-Vorläuferverbindung (ED-Vorläuferverbindung), die die für die Farbstoff freisetzende Reaktion erforderlichen Elektronen liefert, eingesetzt. Liegt also in dem photographischen Material, das die nichtdiffundierenden reduzierbaren Verbindungen enthält, eine ED-Verbindung oder ED-Vorläuferverbindung in bildmäßiger Verteilung vor, so werden durch die Reaktion der ED-Verbindung mit der diffusionsfesten farbgebenden Verbindung diffusionsfähige, photographisch wirksame Verbindungen freigesetzt, so daß in der gleichen bildmäßigen Verteilung die diffusionsfähigen, photographisch wirksamen Verbindungen, insbesondere Farbstoffe, entstehen.

Die reduzierbaren Verbindungen bieten gegenüber den oxidierbaren Verbindungen verschiedene Vorteile, die insbesondere darin liegen, daß die Freisetzung der diffusionsfähigen, photographisch wirksamen Verbindungen besser gesteuert werden kann und dadurch sowohl die Farbtrennung verbessert als auch die Entstehung eines unerwünschten Farbschleiers unterdrückt werden kann. Trotzdem ist es wünschenswert, die Eigenschaften von derartigen in Kombination mit negativen Silberhalogenidemulsionen positiv arbeitenden Farbstoff liefernden Systemen weiter zu verbessern. Berücksichtigt man, daß der Entstehung des diffusionsfähigen Farbstoffes eine Reihe von chemischen Reaktionen vorausgehen müssen, nämlich die photographische Entwicklungsreaktion und die Reaktion des photographischen Entwicklers über die ED-Verbindungen bzw. ED-Vorläuferverbindungen mit der diffusionsfest eingelagerten Farbstoff liefernden Verbindung, wobei diese Reaktionen zum Teil einen relativ komplizierten Verlauf haben und außerdem die verschiedenen Reaktionen zeitlich streng nacheinander ablaufen müssen, um die Entstehung von diffusionsfähigem Farbstoff an unerwünschten Stellen zu vermeiden, so wird klar, daß möglichst viele Freiheitsgrade, insbesondere bei der Auswahl der verschiedenen Reaktionskomponenten, erforderlich sind.

Eine weitere Schwierigkeit besteht darin, daß die im Rahmen der geschilderten Reaktionsabläufe erforderlichen Verbindungen in möglichst einfacher Weise in photographischen Schichten einlagerbar sein müssen, um die Herstellung der photographischen Materialien nicht zu erschweren. Darüber hinaus besteht natürlich die Forderung nach einer ausreichenden Stabilität der für den Reaktionsablauf erforderlichen Verbindungen und insbesondere die Forderung einer möglichst hohen Lichtstabilität der freigesetzten Farbstoffe.

Da die an dem geschilderten Reaktionsablauf beteiligten Verbindungen zum Teil eine relativ komplizierte chemische Struktur haben, ist es ferner wünschenswert, die bestehenden Systeme zu verbessern und zu ersetzen durch andere, die chemisch herstellungsmäßig leichter zugängig sind.

Der Erfindung liegt die Aufgabe zugrunde, neue spaltbare Verbindungen aufzufinden und photographische Materialien zu entwickeln, die solche neuen spaltbaren Verbindungen enthalten. Die neuen Verbindungen sollen reduktiv gespalten werden können und durch Einbau einer Ballastgruppe diffusionsfest in das photographische Material einlagerbar sein. Sie sollen ferner einen photographisch wirksamen, vorzugsweise einen Farbstoffmolekülteil enthalten und derart aufgebaut sein, daß nach der Abspaltung der photographisch wirksame Molekülteil diffusionsfähig wird, während der Rest des Moleküls mit dem Ballastteil in der Schicht diffusionsfest verbleibt. in die die ungespaltene spaltbare Verbindung eingelagert war.

Der für die neuen Verbindungen charakteristische reduktive Spaltungsmechanismus kann durch die Bezeichnung »SR-Verbindung« (Spaltung durch Reduktion) zum Ausdruck gebracht werden. Im folgenden wird daher diese Bezeichnung verwendet.

Die SR-Verbindungen unterscheiden sich von den zuvor genannten reduzierbaren farbgebenden Verbindungen wie folgt. Letztere müssen erst reduziert werden und sind dann durch $\beta$-Spaltung hydrolysierbar. Die dadurch bedingte Abhängigkeit vom pH-Wert kann zu Nachteilen führen. Die erfindungsgemäßen SR-Verbindungen besitzen hiergegen den Vorteil, daß die Spaltung schon durch die Reaktion mit den ED-Verbindungen erfolgt und eine nachfolgende Hydrolyse entfällt.

Das erfindungsgemäße photographische Aufzeichnungsmaterial ist also charakterisiert durch das Vorhandensein einer diffusionsfesten Verbindung, die zu einer reduktiven Spaltungsreaktion unter Freisetzung einer diffusionsfähigen, photographisch wirksamen Verbindung, insbesondere eines Farbstoffes, fähig ist. In besonders bevorzugter Weise werden die erfindungsgemäßen SR-Verbindungen in Kombination mit einer ED-Verbindung oder einer ED-Vorläuferverbindung angewendet, wobei die bildmäßig verteilten ED-Verbindungen der erfindungsgemäßen SR-Verbindung Elektronen zuführt und dadurch die reduktive Spaltungsreaktion zur bildweisen Freisetzung der photographisch wirksamen diffusionsfähigen Verbindung einleitet.

Der für die erfindungsgemäß anwendbaren neuen Verbindungen charakteristische neue Spaltmechanismus, nämlich die reduktive Spaltungsreaktion, bietet den wesentlichen Vorteil, daß hierdurch der

Mechanismus der Steuerung der Freisetzung der photographisch wirksamen Verbindung erheblich besser beeinflußt werden kann. Dieser Spaltungsmechanismus bzw. der Mechanismus für die Freisetzung der photographisch wirksamen Verbindung läuft in besonders vorteilhafter Weise in Kombination mit organischen Reduktionsmitteln ab. Die freizusetzenden photographisch wirksamen Verbindungen lassen sich dabei mit der in photographischen Übertragsverfahren der vorliegenden Art bereits bewährten $NH_2$—$SO_2$-Gruppe abspalten. Dabei werden durch die Kombination mit diesen organischen Reduktionsmitteln, d. h. mit ED-Verbindungen bzw. ED-Vorläuferverbindungen, die Reaktionsgeschwindigkeiten de Teilreaktionen der gesamten Reaktionskette in einer bisher nicht möglichen Weise beeinflußbar und die Bildung von relativ größeren Mengen der gewünschten diffusionsfähigen, photographisch wirksamen, Verbindung, insbesondere eines diffusionsfähigen Farbstoffes, begünstigt.

Die in der erfindungsgemäßen Weise verwendbaren elektronenakzeptierenden SR-Verbindungen, die reduktiv gespalten werden können, lassen sich im Prinzip durch die folgende schematische Struktur charakterisieren:

(Träger mit Ballastgruppen)-(spaltbare Bindung)-(diffusionsfähige Gruppe).

Unter einem »Träger mit Ballastgruppen« wird dabei der Molekülteil verstanden, der die in das photographische Material eingelagerte Verbindung auch unter alkalischen Entwicklungsbedingungen diffusionsfest macht. Im allgemeinen handelt es sich dabei um langkettige Alkylgruppen.

Die chemische Struktur der sogenannten »Ballastgruppen« in den diffusionsfesten, die photographisch wirksame Gruppe enthaltenden Verbindungen ist an sich nicht kritisch. Die photographisch wirksame Gruppe enthält vorzugsweise genügend löslichmachende Gruppen, um nach der reduktiven Spaltung in einem alkalischen Medium genügend diffusionsfähig zu sein. Die Bezeichnung »diffusionsfest« hat in diesem Zusammenhang die auf dem photographischen Gebiet übliche Bedeutung. Unter »diffusionsfesten Verbindungen« werden dabei solche Verbindungen verstanden, die in einem alkalischen Medium nicht durch die hydrophilen Schichten, die beispielsweise Gelatine als Bindemittel enthalten, diffundieren können. Die für diesen Zweck mit der diffusionsfesten Verbindung verbundenen Ballastgruppen enthalten mindestens 8 C-Atome vorzugsweise mindestens 14 C-Atome. Dabei kann eine Ballastgruppe auch aus einer oder mehreren Gruppen bestehen, durch die vorzugsweise $R^1$ und $R^2$ substituiert sind, und die gemeinsam zu der erwünschten Diffusionsfestigkeit beitragen. So läßt sich die gleiche Diffusionsfestigkeit z. B. auch dadurch erreichen, daß zwei oder mehrere vergleichsweise kleine Gruppen, insbesondere Alkylgruppen, z. B. solche mit 5—12 C-Atomen, verwendet werden. Man kann dadurch die gleiche Diffusionsfestigkeit erreichen wie mit einer Ballastgruppe, die z. B. eine relativ langkettige Alkylgruppe mit 8—20 C-Atomen enthält.

Die Bezeichnung »diffusionsfähige Gruppe« umfaßt den photographisch wirksamen Molekülteil, beispielsweise eine Bildfarbstoff liefernde Gruppe, der durch die reduktive Spaltungsreaktion diffusionsfähig wird.

Die beiden eben genannten Molekülteile sind durch eine reduktiv spaltbare Bindungsgruppierung miteinander verbunden.

Die in der erfindungsgemäßen Weise zu verwendenden SR-Verbindungen reagieren bei der Entwicklung des photographischen Aufzeichnungsmaterials mit der darin vorliegenden bildmäßigen Verteilung von nicht verbrauchter ED-Verbindung unter reduktiver Abspaltung des die Ballastgruppe enthaltenden Trägers von der diffusionsfähigen Gruppe. Dieser dadurch selbstständig gewordene Molekülteil mit der photographisch wirksamen bzw. der Farbstoff-Gruppe diffundiert anschließend in benachbarte Schichten bzw. in die Bildempfangsschicht, wo sie die für sie charakteristische photographische Funktion erfüllt. Umgekehrt erfolgt an den belichteten Stellen keine Elektronenübertragung durch die ED-Verbindung auf die elektronenaufnehmende SR-Verbindung, so wird auch keine diffusionsfähige, photographisch wirksame Verbindung frei.

Die in umgekehrte Proportion zu dem bildmäßig entwickelten Silber entstehende Verteilung der ED-Verbindung wird in bekannter Weise durch bildweise Eliminierung der ED-Verbindung vor Reaktion der ED-Verbindung mit einer SR-Verbindung erreicht. Besitzt die ED-Verbindung die Funktion eines Silberhalogenidentwicklers, so wird sie durch die Entwicklung des belichteten Silberhalogenids oxidiert und verliert in diesen Schichtteilen ihre Reaktionsfähigkeit, auf die SR-Verbindung einzuwirken.

Bei den an sich ebenfalls bekannten ED-Verbindungen, die keine photographischen Entwickler darstellen, wirkt der tatsächlich vorhandene photographische Entwickler als Mittel zur Übertragung von Elektronen und reagiert in seiner oxidierten Form mit der ED-Verbindung, bevor diese Gelegenheit hat, auf die SR-Verbindung einzuwirken.

Durch diesen Mechanismus erreicht man die bildweise Verteilung im Sinne einer Bildumkehr. Die zuletzt genannte Reaktionsfolge, insbesondere unter Verwendung von ED-Vorläuferverbindungen, ist für das erfindungsgemäße photographische Aufzeichnungsmaterial, das die SR-Verbindung enthält, bevorzugt.

Durch die Kombination der erfindungsgemäßen SR-Verbindungen mit geeigneten ED-Verbindungen oder ED-Vorläuferverbindungen und photographischen Entwicklern als Elektronenübertragungsmitteln gelingt es, die Teilreaktionen des gesamten Reaktionsablaufes praktisch unabhängig voneinander zu erwirken. Hierdurch wird eine optimale Entstehungsgeschwindigkeit des positiven Farbbildes mit hervorragenden Dichten unter Vermeidung von Farbschleiern erreicht.

Darüber hinaus zeichnen sich die in der erfindungsgemäßen Weise zu verwendenden Verbindungen

durch eine relativ einfache Struktur und einfache Herstellungsmöglichkeiten aus.

Gegenstand der Erfindung ist ein photographisches Aufzeichnungsmaterial mit mindestens einer lichtempfindlichen Silberhalogenidemulsionsschicht, das mindestens eine diffusionsfeste Verbindung enthält, aus der durch eine reduktive Spaltungsreaktion eine diffusionsfähige photographisch wirksame Verbindung, vorzugsweise ein Farbstoff oder ein Farbstoffvorläuferprodukt, freigesetzt wird, das dadurch gekennzeichnet ist, daß diese diffusionsfeste Verbindung ein Sulfilimin ist. Bevorzugte Sulfilimine können durch die folgende Formel I beschrieben werden:

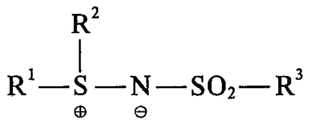

(I)

worin bedeuten:

$R^1$ und $R^2$ gleiche oder verschiedene Arylreste, insbesondere Phenyl oder mehrkernige Arylreste wie Naphthyl oder Anthracenyl, wobei mindestens einer der Arylreste mindestens einen elektronenanziehenden Substituenten, z. B. Nitro in o- oder p-Stellung und gegebenenfalls weitere Substituenten enthält und wobei mindenstens einer der Arylreste eine Ballastgruppe enthält:

$R^3$ den Rest einer diffusionsfähigen photographisch wirksamen Verbindung, insbesondere den Rest einer einen Bildfarbstoff liefernden Verbindung.

Besonders geeignete Verbindungen der vorliegenden Erfindung entsprechen der folgenden Formel II:

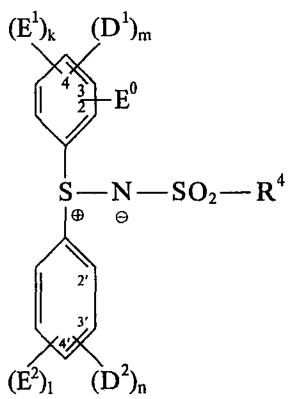

(II)

worin bedeuten

$E^0$ $-NO_2$ in 2- oder 4-Stellung

$E^1$, $E^2$ elektronenanziehende Substituenten in 2- oder 4- (bzw. 2'- oder 4'-) Stellung, z. B. $-NO_2$, $-CF_3$, $-CN$, $-SO_2CF_3$, Carbalkoxy, Alkylsulfonyl, Sulfamoyl, Carbamoyl;

$D^1$, $D^2$ diffusionsfestmachende Reste;

$R^4$ den Rest eines diffusionsfähigen Farbstoffes oder Farbstoffvorläufers; und

k, l, m, n jeweils 0 oder 1 mit der Maßgabe, daß $m + n \geq 1$.

Mit den obigen Angaben sind die wesentlichen Strukturmerkmale der erfindungsgemäßen SR-Verbindungen umrissen. Darüber hinaus kann jeder der beiden dargestellten Benzolringe einen ankondensierten Benzolring, vorzugsweise in 2,3- (bzw. 2',3'-) Stellung, sowie gegebenenfalls zusätzliche Substituenten wie Halogen, Hydroxy, Alkoxy, Acyloxy oder Acylamino enthalten.

Die in der Definition von $E^1$ und $E^2$ erwähnten Sulfamoyl- bzw. Carbamoylgruppen können am Stickstoffatom unsubstituiert sein oder substituiert z. B. mit Alkyl oder Aryl. Das Stickstoffatom kann auch identisch sein mit demjenigen einer cyclischen Aminogruppe (Pyrrolidino, Piperidino, Morpholino).

Der in einer der genannten Carbalkoxy-, Alkylsulfonyl- und alkylsubstituierten Sulfonyl- bzw. Carbamoylgruppen der Definition von $E^1$ und $E^2$ oder in einem der erwähnten zusätzlichen Substituenten wie Alkoxy, Acyloxy oder Acylamino enthaltende Alkylteil kann bis zu 22 C-Atome umfassen und gegebenenfalls weitere Substituenten tragen wie etwa Hydroxy, Halogen, Alkoxy oder Aryloxy.

Als diffusionsfest machende Reste sind solche Reste anzusehen, die es ermöglichen, die erfindungsgemäßen SR-Verbindungen in den üblicherweise bei photographischen Materialien verwendeten hydrophilen Kolloiden diffusionsfest einzulagern. Hierzu sind vorzugsweise organische Reste geeignet; die geradkettige oder verzweigte aliphatische Gruppen mit im allgemeinen 8—20 C-Atomen enthalten und gegebenenfalls auch isocyclische oder heterocyclische Gruppen enthalten können. Mit dem übrigen Molekülteil sind diese Reste entweder direkt oder indirekt, z. B. über eine der folgenden Gruppen

verbunden: –NHCO–, –NH–CO–NH–, –O–CO–O–, $-NHSO_2-$, –NR–, wobei R Wasserstoff oder Alkyl bedeutet, –O–, –S– oder $-SO_2-$. Zusätzlich kann der diffusionsfest machende Rest auch wasserlöslich machende Gruppen enthalten, wie z. B. Sulfogruppen oder Carboxylgruppen, die auch in anionischer Form vorliegen können. Da die Diffusionseigenschaften von der Molekülgröße der verwendeten Gesamtverbindung abhängen, genügt es in bestimmten Fällen, z. B. wenn das verwendete Gesamtmolekül groß genug ist, als »diffusionsfest machende Reste« auch kürzerkettige Reste zu verwenden. An die Stelle eines einzelnen diffusionsfestmachenden Restes können daher mehrere kürzere Reste, z. B. tert.-Butyl- oder iso-Amylgruppen treten. Im vorliegenden Fall können auch die Funktionen eines diffusionsfestmachenden Restes ($D^1$, $D^2$) einerseits und eines zusätzlichen elektronenanziehenden Substituenten ($E^1$, $E^2$) andererseits in ein und demselben Rest kombiniert sein, wenn beispielsweise ein diffusionsfestmachender Rest in einer der durch $E^1$, $E^2$ repräsentierten Carbalkoxy-, Alkylsulfonyl-, Carbamoyl- oder Sulfamoylgruppen enthalten ist, z. B. in Form einer $-SO_2NH-C_{16}H_{33}$-Gruppe.

Bei dem durch $R^3$ dargestellten Rest einer einen Bildfarbstoff liefernden Verbindung handelt es sich bevorzugt um den Rest eines diffusionsfähigen Farbstoffes oder Farbstoffvorläufers.

Als Farbstoffreste sind grundsätzlich die Reste von Farbstoffen aller Farbstoffklassen geeignet, soweit sie genügend diffusionsfähig sind, um durch die Schichten des lichtempfindlichen Materials hindurch in die Bildempfangsschicht diffundieren zu können. Zu diesem Zweck können die Farbstoffreste mit einer oder mehreren alkalilöslichmachenden Gruppen versehen sein. Als alkalilöslichmachende Gruppen sind unter anderem geeignet Carboxylgruppen, Sulfogruppen, Sulfonamidgruppen sowie aromatische Hydroxylgruppen.

Solche alkalilöslichmachende Gruppen können in den erfindungsgemäßen SR-Verbindungen bereits vorgebildet sein oder erst aus der Abspaltung des Farbstoffrestes von den mit Ballastgruppen behafteten Trägerrest resultieren. An Farbstoffen, die für das erfindungsgemäße Verfahren besonders geeignet sind, sind zu erwähnen:

Azofarbstoffe, Azomethinfarbstoffe, Antrachinonfarbstoffe, Phthalocyaninfarbstoffe, indigoide Farbstoffe, Triphenylmethanfarbstoffe, einschließlich solcher Farbstoffe, die mit Metallionen komplexiert oder komplexierbar sind.

Unter den Resten von Farbstoffvorläufern sind die Reste solcher Verbindungen zu verstehen, die im Laufe der photographischen Verarbeitung durch übliche oder zusätzliche Verarbeitungsschritte, sei es durch Oxidation, sei es durch Kupplung oder durch Freilegung einer auxochromen Gruppe in einem chromophoren System, beispielsweise durch Verseifung, in Farbstoff übergeführt werden. Farbstoffvorläufer in diesem Sinn können sein Leukofarbstoffe, Kuppler oder auch Farbstoffe, die im Laufe der Verarbeitung in andere Farbstoffe umgewandelt werden. Sofern nicht eine Unterscheidung zwischen Farbstoffresten und den Resten von Farbstoffvorläufern von wesentlicher Bedeutung ist, sollen letztere im folgenden auch unter der Bezeichnung Farbstoffreste verstanden werden.

Beispiele für erfindungsgemäß geeignete nicht diffundierende reduzierbare SR-Verbindungen sind im folgenden aufgeführt:

Sulfilimine

1. 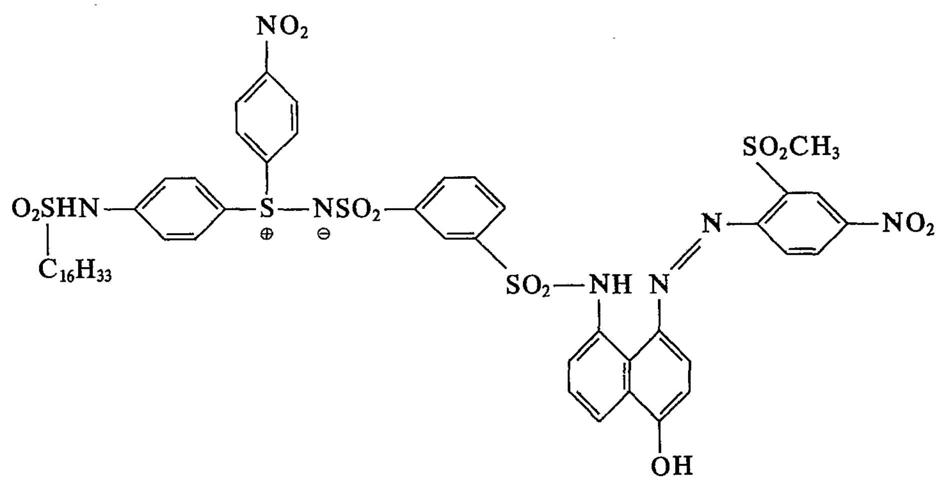

2. 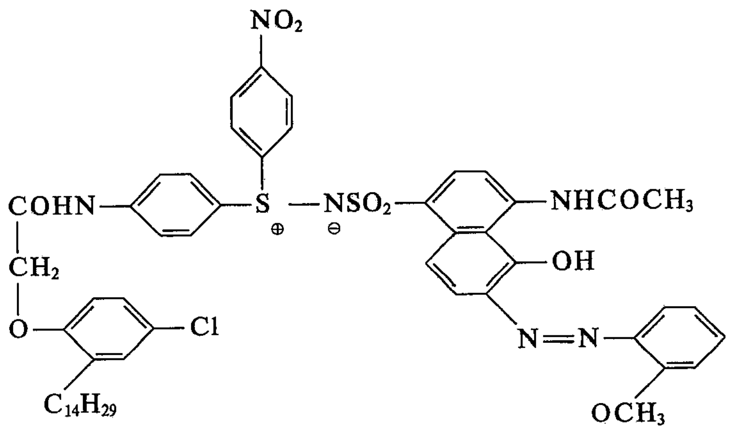

3. 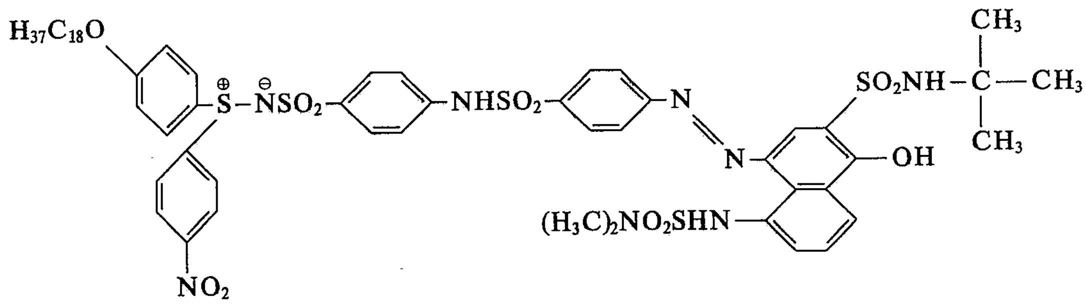

4. 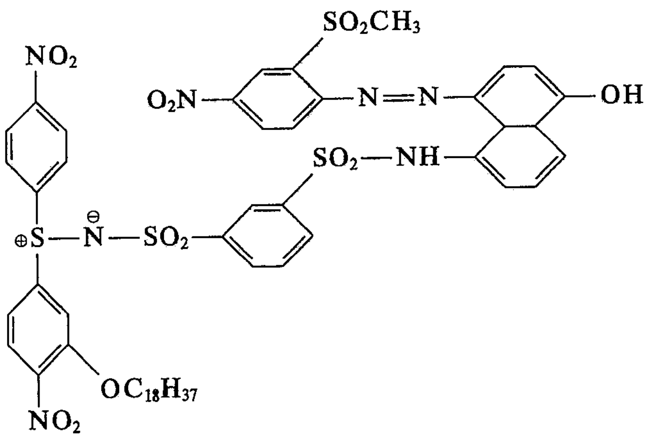

5. 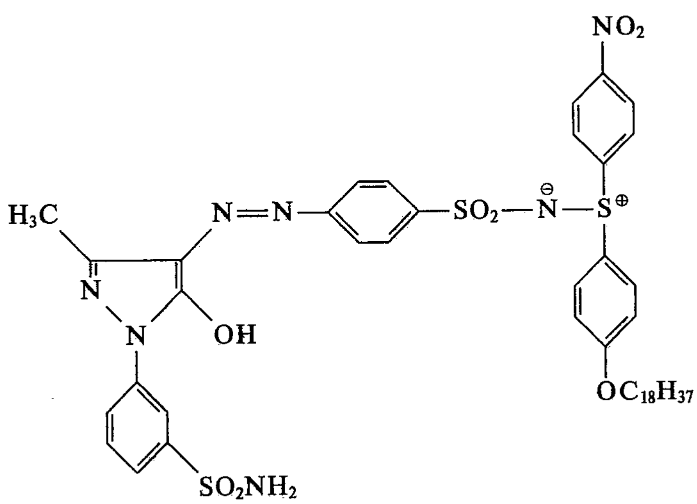

6.

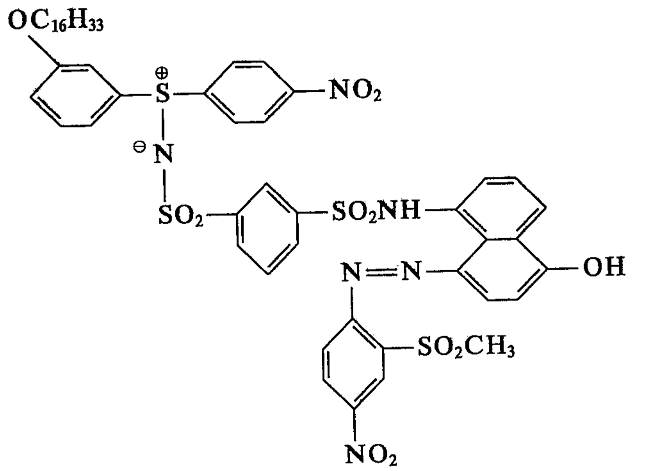

7.

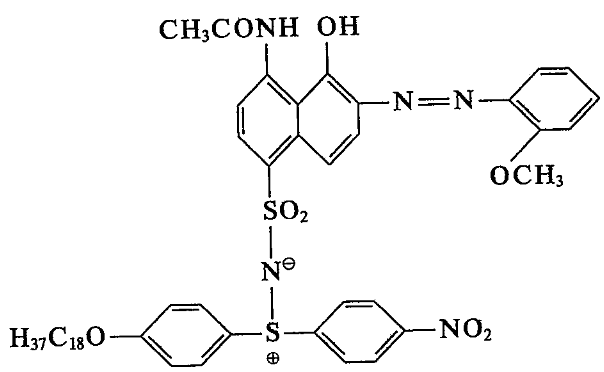

8.

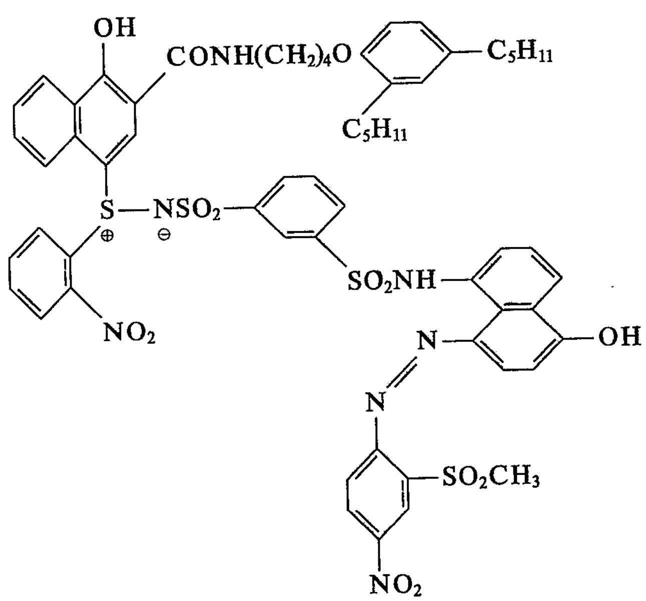

9.

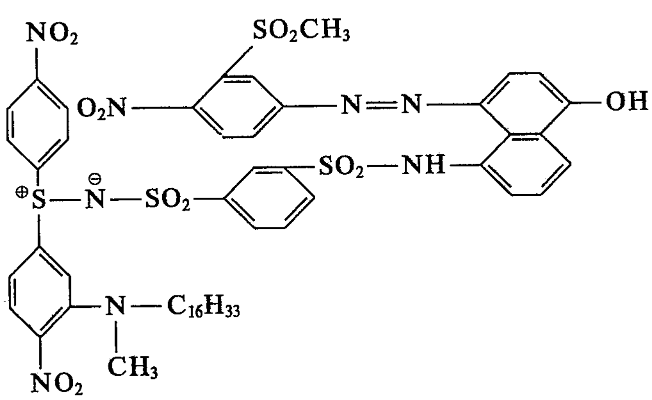

10.

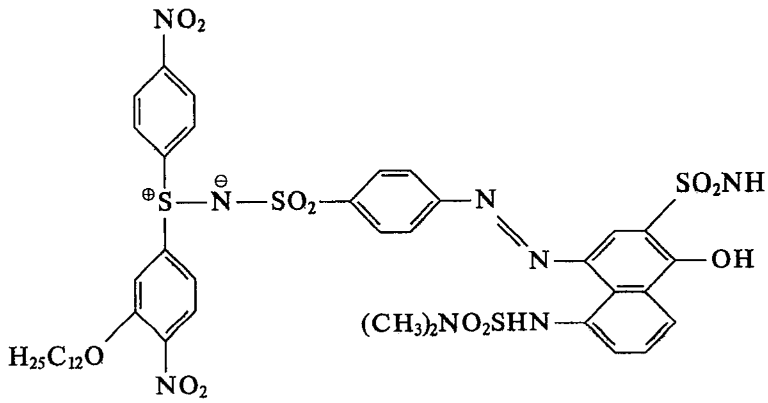

11.

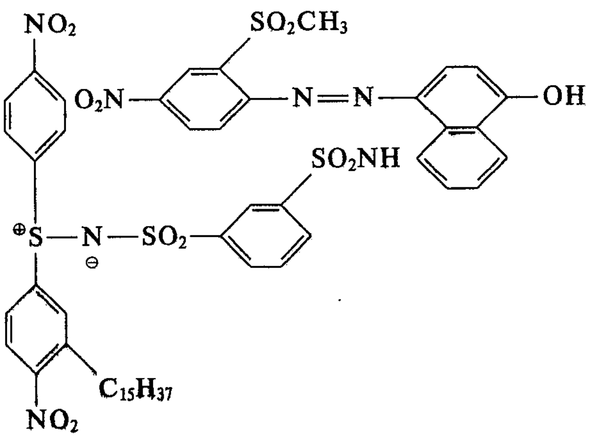

12.

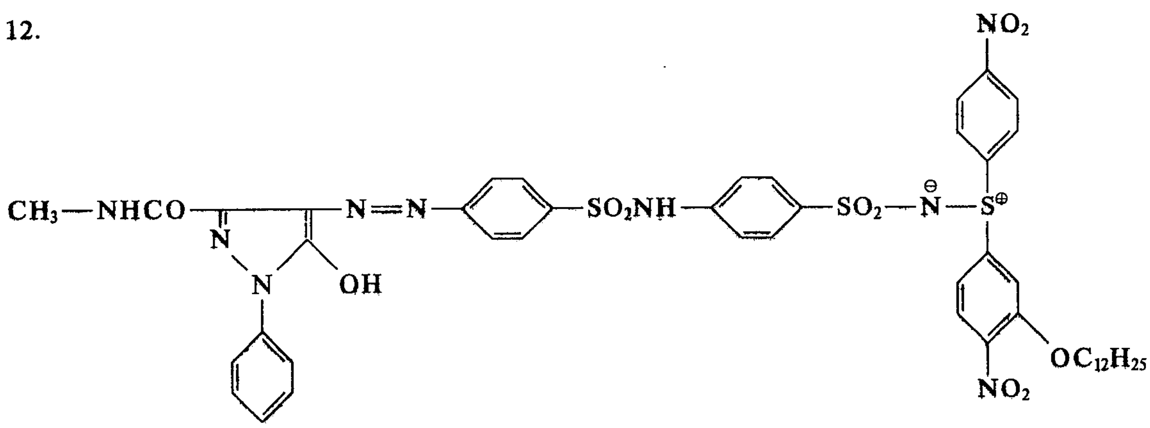

13.

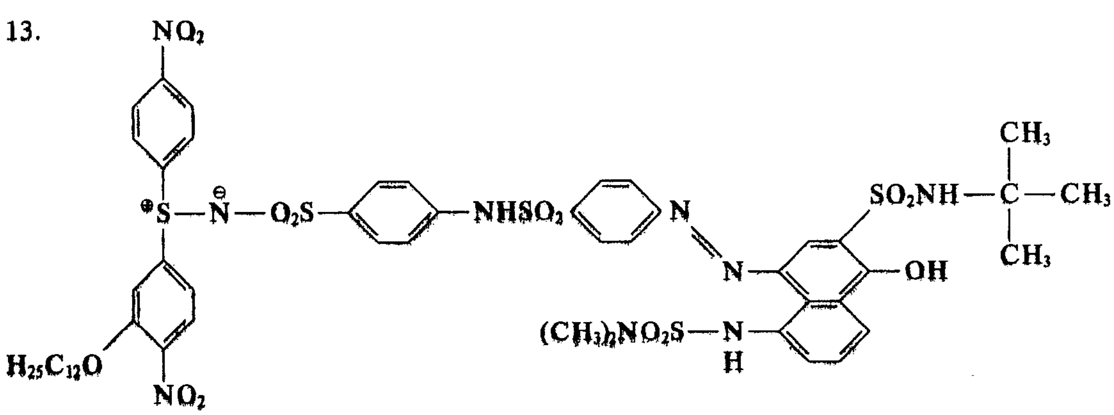

14.

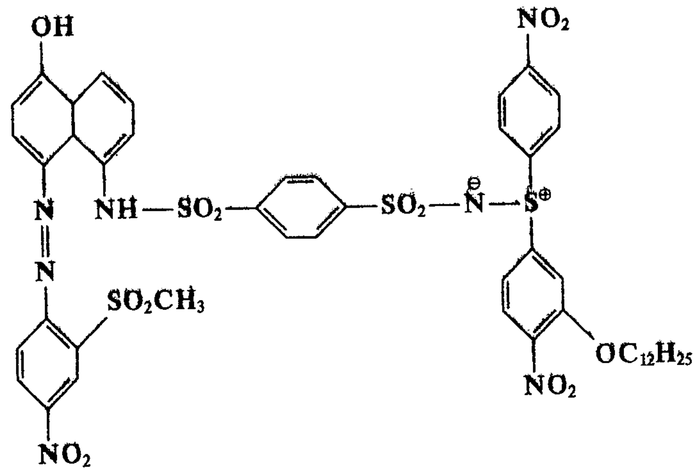

15.

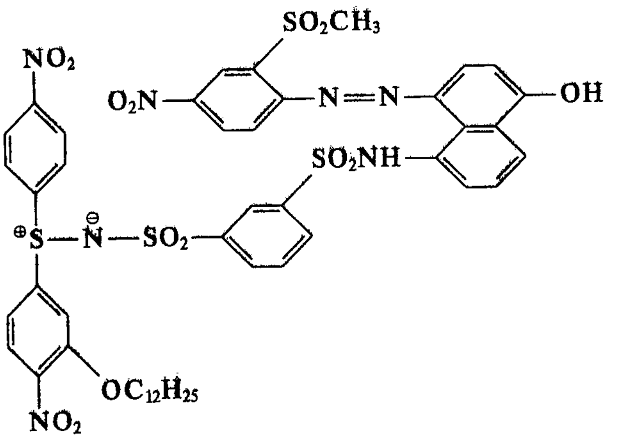

16.

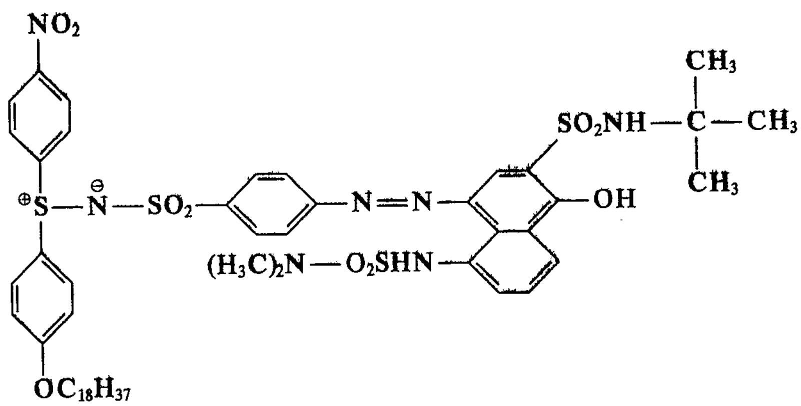

17.

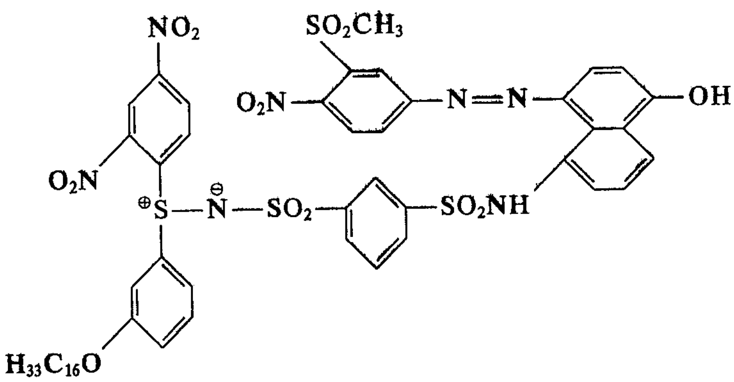

18.

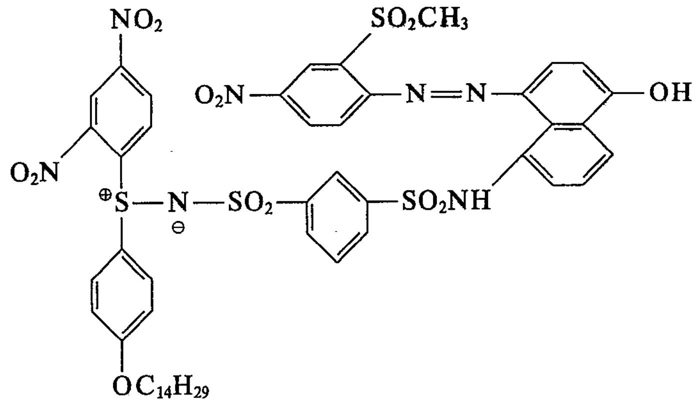

19.

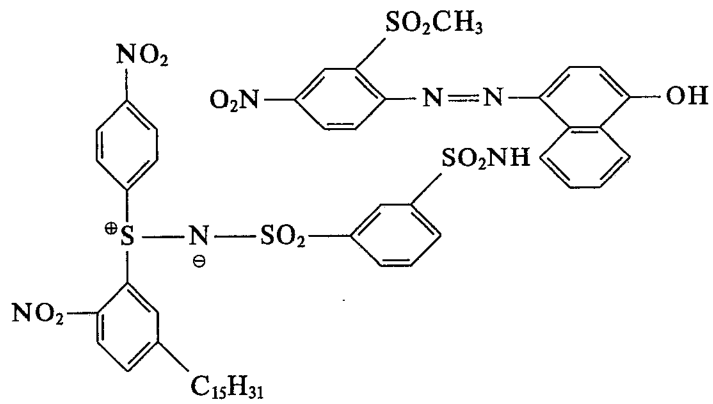

20.

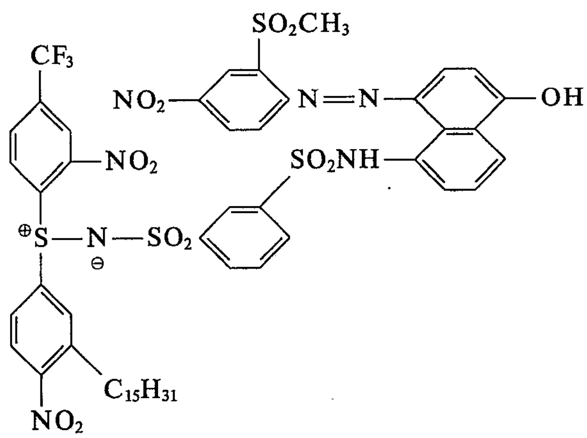

21.

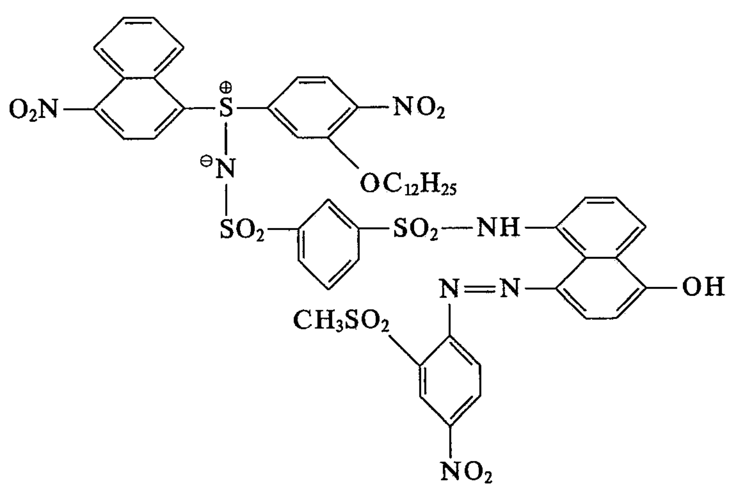

22.

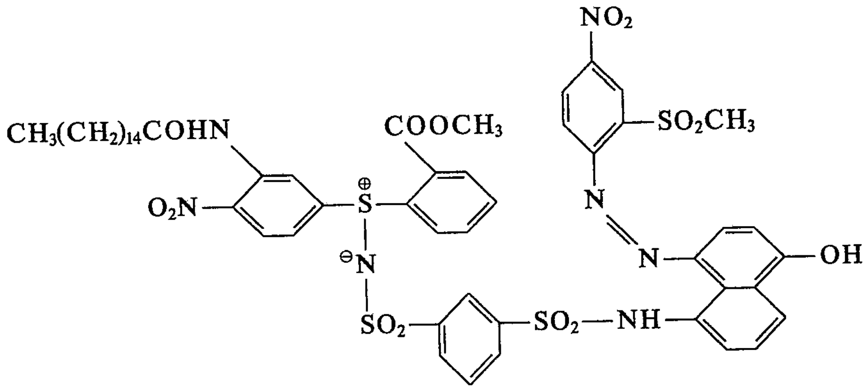

23.

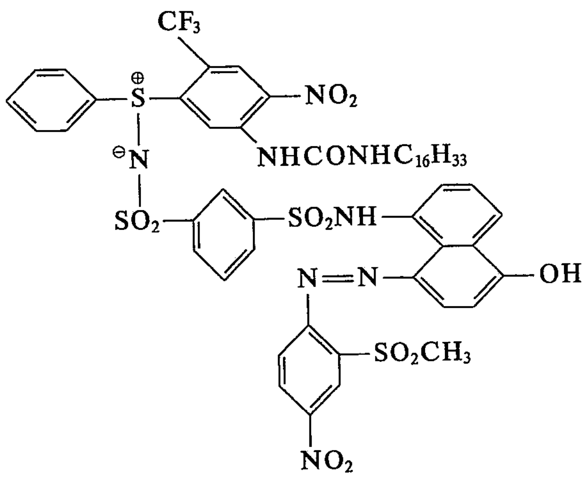

24.

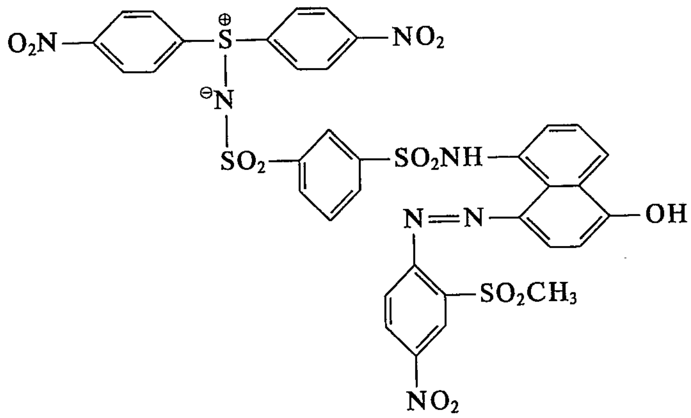

25.

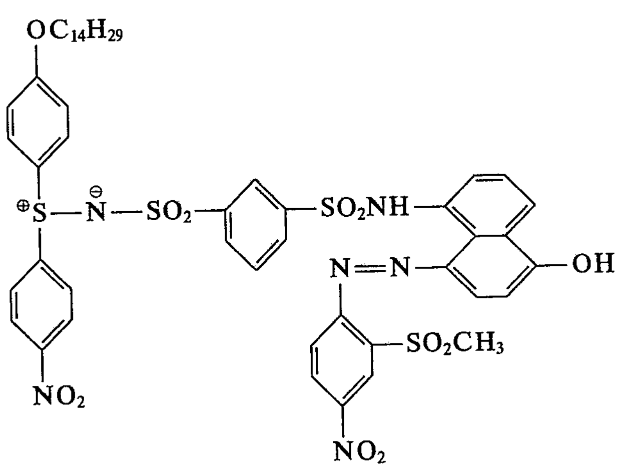

26.

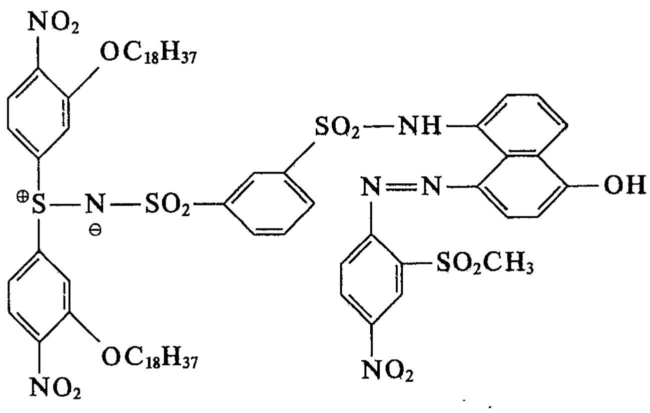

27.

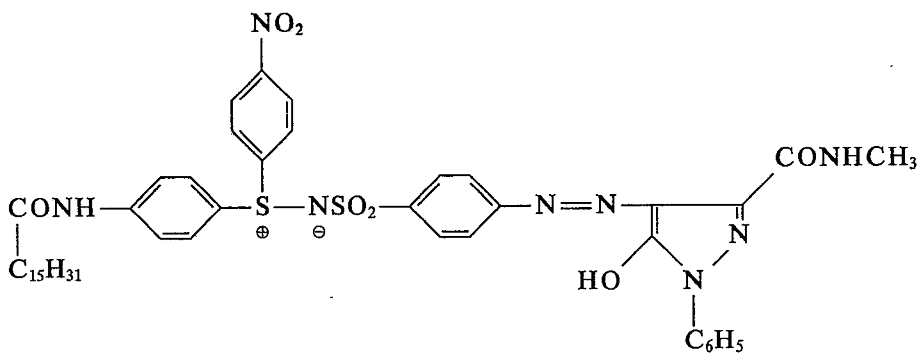

28.

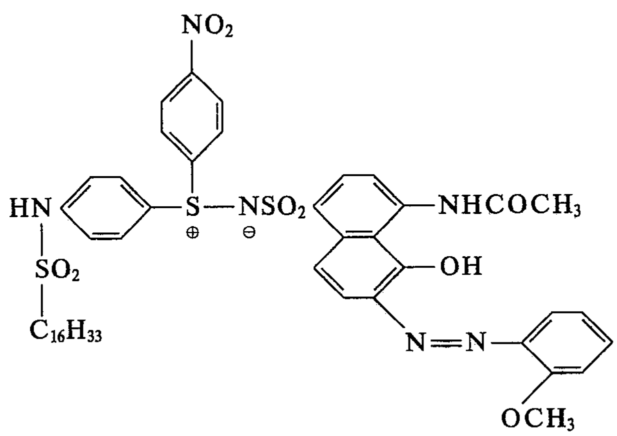

29.

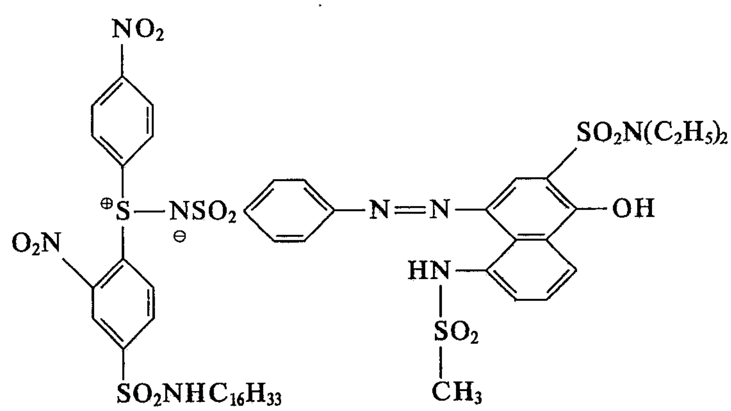

30.

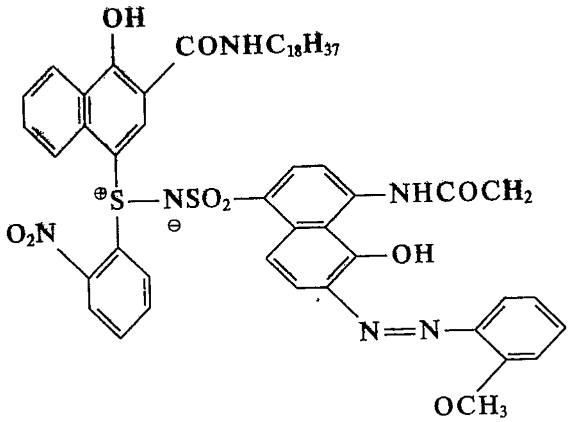

31.

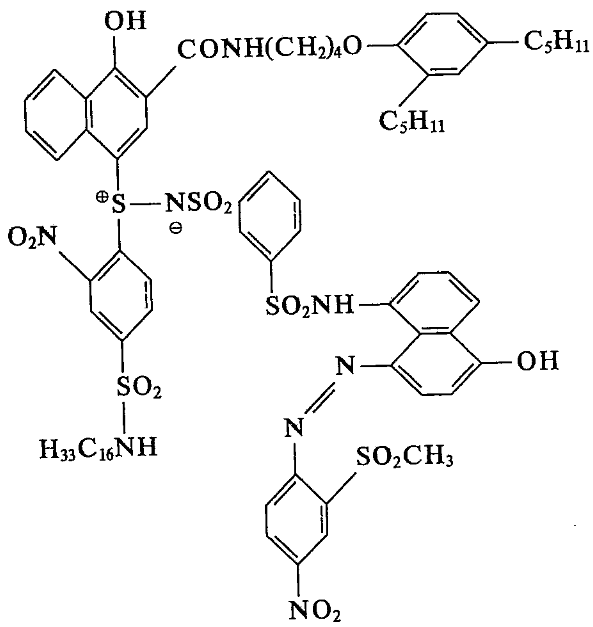

32.

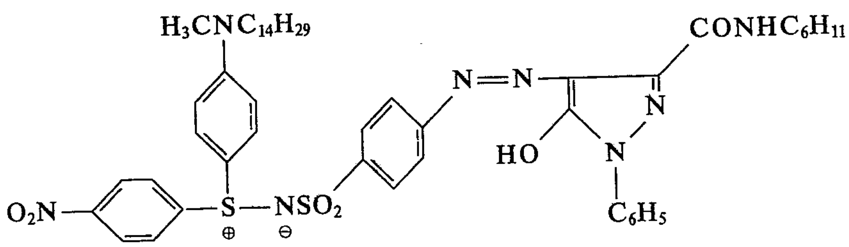

33.

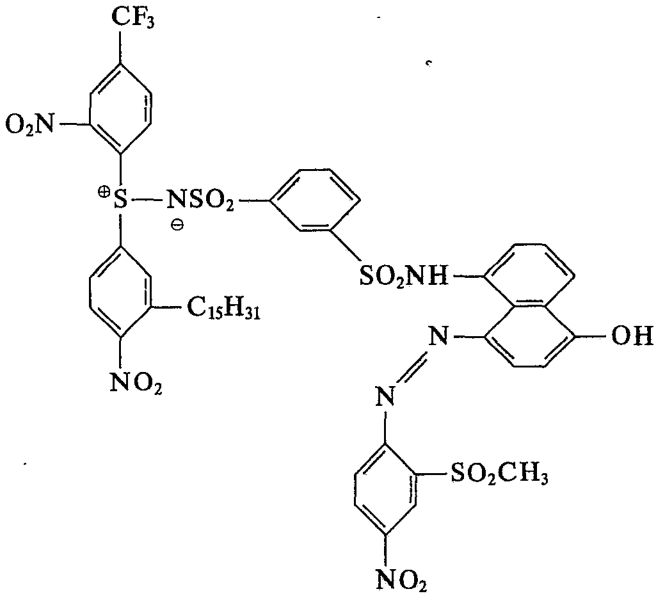

34.

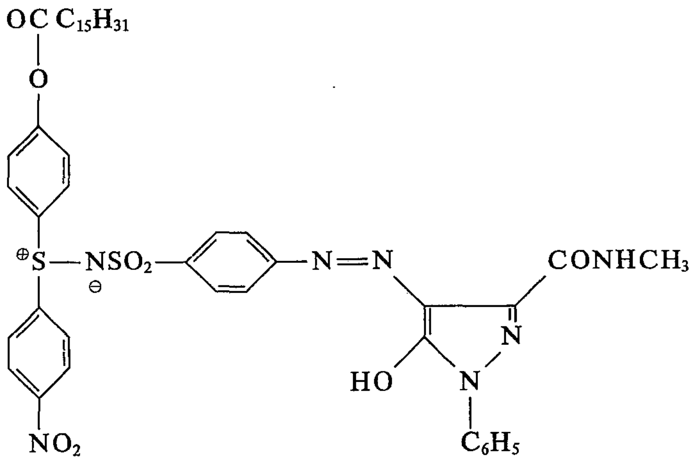

35.

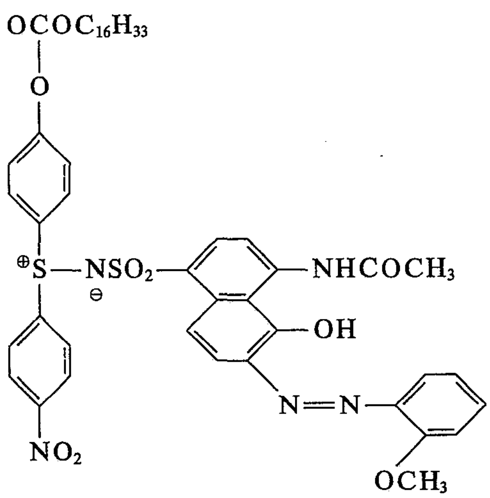

Die Funktionsweise der erfindungsgemäßen SR-Verbindungen wird durch das nachfolgende Reaktionsschema erläutert.

An den belichteten Stellen des photographischen Materials wird die reduzierende, Elektronen liefernde ED-Verbindung, die mit der SR-Verbindung in aktivem Kontakt in der photographischen Schicht enthalten ist, direkt oder indirekt durch die photographische Entwicklungsreaktion oxidiert. Sie ist in dieser Form nicht in der Lage, mit den SR-Verbindungen zu reagieren, während an den unbelichteten Stellen die unveränderte ED-Verbindung mit der SR-Verbindung unter reduktiver Abspaltung der diffusionsfähigen Gruppe, vorzugsweise eines Farbstoffes, reagiert.

Reaktionsschema für das Beispiel der Sulfilimin-SR-Verbindungen:

Belichtete Stellen

ED-Verbindungen + AgHal ⟶ $ED_{ox}$ + Ag + HHal

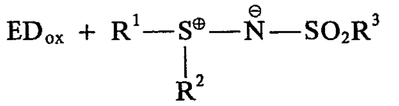

keine Reaktion

Unbelichtete Stellen

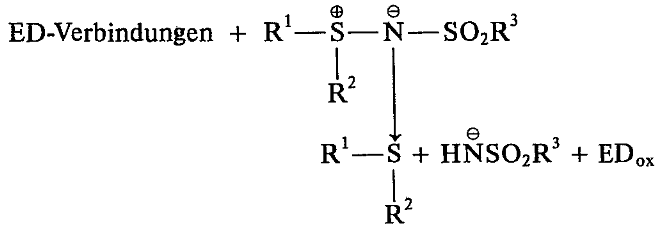

Ein besonderer Vorteil der in der erfindungsgemäßen Weise zu verwendenden SR-Verbindungen beruht darin, daß – wie das obige Reaktionsschema zeigt – bei der Abspaltungsreaktion an den unbelichteten Stellen photographisch wirksame Verbindungen, insbesondere Farbstoffe, entstehen, die eine Sulfamoylgruppe enthalten. Derartige Farbstoffe lassen sich besonders gut in Bildempfangsschichten, die polymere Beizen enthalten, festlegen. Dieser und weitere Vorteile von Farbstoffsulfonamiden sind in der DE-A-2 242 762 oder auch der DE-A-2 505 248 beschrieben. Die dort angegebenen Farbstoff liefernden Systeme bewirken jedoch bei der Farbstoffbildung keine Bildumkehr, so daß sie nur mit direktpositiven Silberhalogenidemulsionen für die Herstellung von positiven Farbstoffübertragsbildern kombiniert werden können.

Bei den bereits bekannten reduzierbaren farbgebenden Verbindungen, wie z. B. den in DE-A-2 809 716 beschriebenen oder den in der EP-A2-4 399 beschriebenen, wird durch den Abspaltungsmechanismus zwar eine Bildumkehr bewirkt, es entstehen jedoch Farbstoffe mit Amino- bzw. Sulfinsäuregruppen, die weniger vorteilhaft sind.

Ein weiterer Vorteil der in der erfindungsgemäßen Weise zu verwendenden SR-Verbindungen, insbesondere der Farbstoffsulfilimine, liegt darin, daß sie in alakalischem Medium praktisch unbegrenzt stabil und damit den meisten der bekannten reduzierbaren farbgebenden Verbindungen überlegen sind.

Im folgenden wird die Herstellung einiger der in der erfindungsgemäßen Weise zu verwendenden SR-Verbindungen beschrieben. Die anderen der oben genannten Verbindungen bzw. weitere unter die allgemeinen Formeln I und II fallende Verbindungen werden in analoger Weise hergestellt. Der Farbstoffteil de SR-Verbindungen entspricht in der Konstitution den typischen Farbstoffen, wie sie üblicherweise bei photographischen Materialien und Verfahren, in denen diffusionsfähige Farbstoffe zur Anwendung kommen, eingesetzt werden.

Die Strukturen der Verbindungen wurden durch die üblichen physikalischen Methoden wie Infrarot-Analyse oder Massenspektren bestätigt und sind in Übereinstimmung mit dem Abspaltungsverhalten.

Verbindung 1

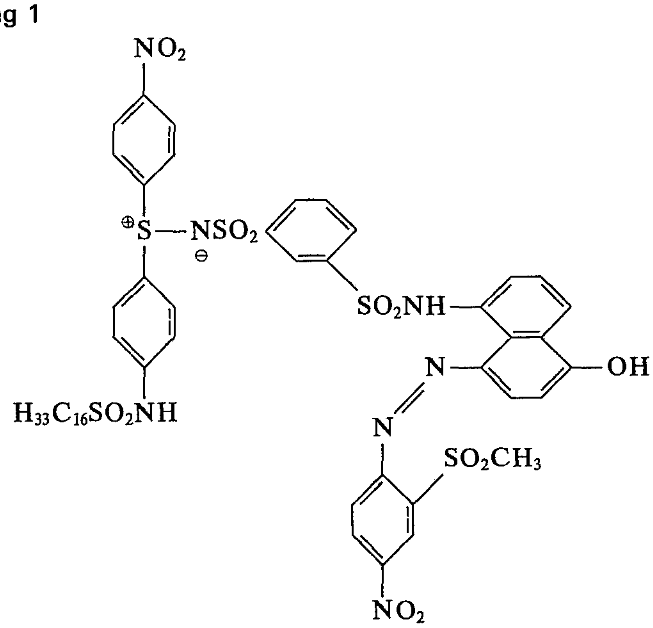

Stufe 1

4-Nitro-4'-hexadecylsulfonylamino-diphenylsulfid

5 g 4-Amino-4'-nitrodiphenylsulfid (0,02 Mol) werden in 70 ml Pyridin gelöst und portionsweise bei Raumtemperatur mit 6,48 g Hexadecylsulfochlorid (0,02 Mol) versetzt. Es wird 4 Std weitergerührt und dann der Ansatz auf Eis/Salzsäure gegossen, der Niederschlag mit Wasser gewaschen und aus Methanol umkristallisiert.

Ausbeute: 10,25 g ≙ 96% d. Th.
Fp. 68–70°C.

Stufe 2

4-Nitro-4'-hexadecylsulfonylamino-diphenyl-sulfiliminmesitylat

5,4 g Mesitylsulfonyl-O-hydroxylamin (0,025 Mol) (Y. Tamura, I. Minamihawa, M. Ikeda, Synthesis 1977, 1) werden in 30 ml Methylenchlorid gelöst und unter Rühren bei 0°C 10,7 g der Verbindung aus Stufe 1 in 40 ml Methylenchlorid gelöst zugetropft. Nach 4 Std. war die Reaktion beendet. Das Lösungsmittel wurde absorbiert, der Rückstand mehrmals mit Ether aufgeschlämmt, abdekantiert und unter Vakuum getrocknet.

Ausbeute: 13,9 g ≙ 97,5% d. Th.

Stufe 3 (Verbindung 1)

3,74 g des Mesitylats der Stufe 2 (0,005 Mol) werden in 150 ml Methylenchlorid gelöst und mit 3,12 g 5-(3-Chlorsulfonylphenylsulfonamido)-4-(2-methylsulfonyl-4-nitrophenylazo)-1-naphthol (0,005 Mol) versetzt. Zu dieser Suspension tropft man unter starkem Rühren bei 0°C 1,38 g Pottasche in 150 ml Wasser gelöst zu. Nach 2 Std. werden die beiden Phasen getrennt, die Methylenchloridlösung mit verdünnter Pottasche-Lösung und so lange mit Wasser gewaschen, bis die wässrige Phase farblos ist. Die Methylenchloridlösung wird getrocknet, eingeengt, der Rückstand in wenig Essigester gelöst und mit Benzin gefällt. Der Niederschlag wird noch zweimal mit Benzin ausgekocht und abfiltriert.

Ausbeute: 4,7 g ≙ 83% d. Th.
Fp. 128–130°C.

Verbindung 2

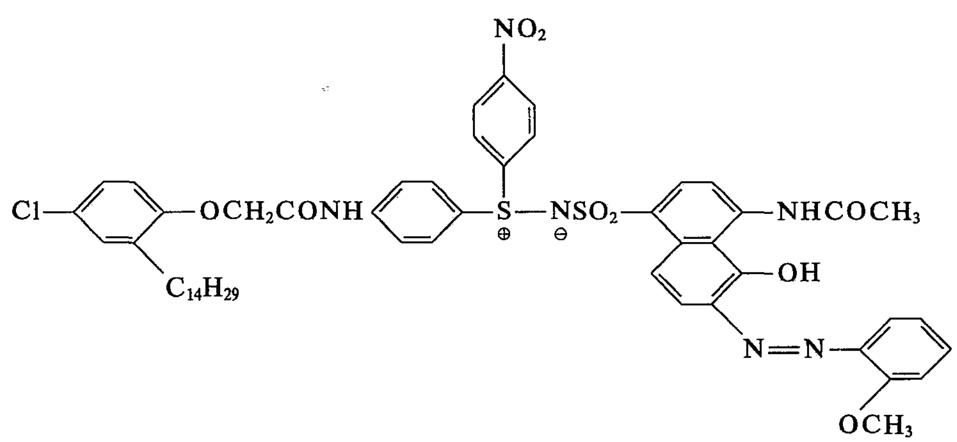

Stufe 1

4-Nitro-4'-(2-tetradecyl-4'-chlorphenoxyacetyl)-aminodiphenylsulfid

In eine Lösung von 5,2 g 4-Amino-4'-nitrodiphenylsulfid (0,021 Mol), 2,54 g N,N-Dimethylanilin (0,021 Mol) in 50 ml Aceton tropft man bei Raumtemperatur unter Rühren eine Lösung von 8,4 g 2-Tetradecyl-4-chlorphenoxyessigsäurechlorid (0,021 Mol) in 25 ml Aceton ein. Nach 2 Std. wird der

Ansatz auf Eiswasser/HCl gegossen und mit Essigester extrahiert. Die Essigesterlösung wird getrocknet, mit Bleicherde gerührt und über Theorit abgesaugt. Nach dem Abdestillieren des Lösungsmittels bleibt das obengenannte Produkt zurück.

Ausbeute: 10 g ≙ 82% d. Th.

Stufe 2

4-Nitro-4'-(2'-tetradecyl-4'-chlorphenoxyacetyl)-aminodiphenylsulfilimin-mesitylat

Zu einer Lösung von 1,14 g MSH (Mesitylsulfonyl-O-hydroxylamin) (0,0054 Mol) in 5 ml Methylenchlorid werden bei 0°C 3,1 g (0,0053 Mol) der Verbindung aus Stufe 1 in 5 ml Methylenchlorid gelöst zugetropft. Nach 2 Std. war die Reaktion beendet. Das Lösungsmittel wurde abdestilliert, der Rückstand in Ether gelöst und mit Benzin ausgefällt.

Ausbeute: 4,05 g ≙ 92,5% d. Th.

Stufe 3 (Verbindung 2)

Zu einer Suspension von 1,1 g (0,00133 Mol) des Mesitylats der Stufe 2 und 0,58 g (0,00133 Mol) 8-Acetylamino-5-chlorsulfonyl-2-(2-methoxyphenylazo)-1-naphthol in 15 ml Aceton werden unter Rühren bei Raumtemperatur 0,45 g (0,0033 Mol) Pottasche in 1 ml Wasser gelöst eingetropft. Es wird 2 Std. bei Raumtemperatur nachgerührt, der Niederschlag abgenutscht, mit Wasser und Aceton gewaschen und getrocknet.

Ausbeute: 1,0 g ≙ 77,2% d. Th.
Fp. 188–192°C.

Verbindung 8

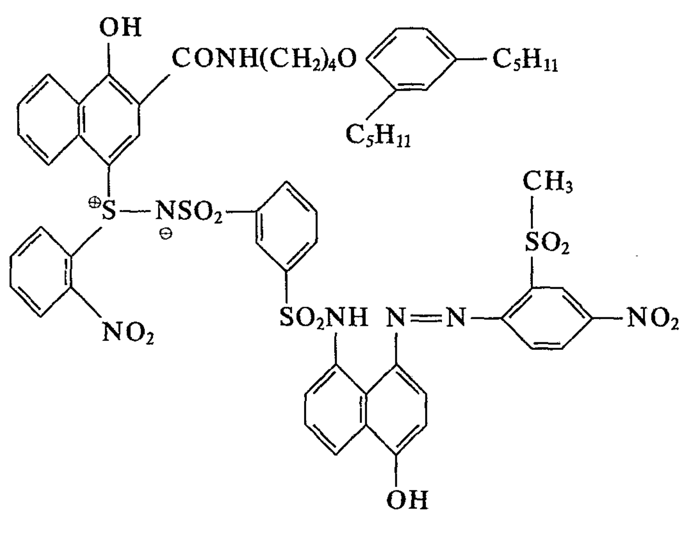

Stufe 1

4-(2'-Nitrophenylthio)-1-hydroxy-2-(2",4"-di-t-pentylphenoxybutyl)-naphthamid

Zu einer Lösung von 4,75 g (0,025 Mol) 2-Nitrobenzolsulfenylchlorid in 40 ml Chloroform werden 8,9 g (0,019 Mol) 1-Hydroxy-2-(2',4'-di-t-pentylphenoxybutyl)-naphthamid in 60 ml Chloroform gelöst bei Raumtemperatur zugetropft. Die Lösung wird 3 Tage unter Rückfluß erhitzt. Das Lösungsmittel wird abdestilliert und der Rückstand mit Benzin kristallisiert. Umkristallisation aus Benzin.

Rohausbeute: 10,35 g.

Stufe 2

4-(2'-Nitrophenylsulfilimino)-1-hydroxy-2-(2",4"-di-t-pentylphenoxybutyl)-naphthamid-mesitylat

Der Thioether aus Stufe 1 wird in bekannter Weise mit MSH umgesetzt. Nach 3 Std. Reaktionsdauer wird das Lösungsmittel abdestilliert und das Mesitylat mit Ether zur Kristallisation gebracht.

Ausbeute: 95,8%.
Fp. 182–185°C.

Stufe 3 (Verbindung 8)

2,65 g (0,003 Mol) des Mesitylats aus Stufe 2 und 1,88 g (0,003 Mol) 5-(3-Chlor-sulfonyl-phenylsulfonamido)-4-(2-methylsulfonyl-4-nitrophenylazo)-1-naphthol werden in 200 ml Aceton suspendiert und langsam bei Raumtemperatur mit 0,82 g (0,006 Mol) Pottasche in wenig Wasser gelöst versetzt. Die Lösung wurde über Nach gerührt, dann eingeengt, der Rückstand in Essigester aufgenommen, von Ungelösten abgetrennt, wieder eingeengt und säulenchromatographisch über Kieselgel in Toluol/Methanol 3:1 gereinigt.

Ausbeute: 2,23 g = 61% d. Th.
Fp. 183–190°C.

In gleicher Weise, wie jeweils für die Verbindungen 1, 2 und 8 beschrieben, wurden weitere SR-Verbindungen hergestellt mit den in der folgenden Tabelle angegebenen Schmelzpunkten.

| Verbindung | Schmelzpunkt, °C | Verbindung | Schmelzpunkt, °C |
|---|---|---|---|
| 3 | 195–205 | 16 | 173–178 |
| 4 | 115–117 | 17 | 168–171 |
| 5 | 98–101 | 18 | 117–123 |
| 6 | 105–112 | 19 | 114–117 |
| 7 | 181–182 | 20 | 108–109 |
| 9 | 108–110 | 21 | 120–123 |
| 10 | 164–168 | 22 | 104–106 |
| 11 | 145–146 | 24 | 248 |
| 12 | 135–138 | 25 | 105–108 |
| 14 | 205–207 | 26 | 186–188 |
| 15 | 118–122 | | |

Da das erfindungsgemäße photographische Material bevorzugt zur Herstellung von Farbbildern in natürlichen Farben dient, besitzt es vorzugsweise den für diese Zwecke erforderlichen Aufbau und enthält eine rotempfindliche Silberhalogenidemulsionsschicht mit einer SR-Verbindung, die einen diffusionsfähigen Blaugrün-Bildfarbstoff abspaltet, eine grünempfindliche Silberhalogenidemulsionsschicht mit einer SR-Verbindung, die einen diffusionsfähigen Purpur-Farbstoff abspaltet, sowie eine blauempfindliche Silberhalogenidemulsionsschicht, in der aus der SR-Verbindung bildmäßig ein diffusionsfähiger Gelb-Farbstoff gebildet wird.

Die SR-Verbindungen brauchen jedoch nicht zwangsläufig in der Silberhalogenidemulsionsschicht enthalten zu sein; erforderlich ist lediglich, daß sie sich in wirksamem Kontakt mit dieser befinden. Hierunter wird lediglich verstanden, daß die SR-Verbindungen in oder zu der Silberhalogenidemulsionsschicht so angeordnet sein müssen, daß die gesamte Reaktionskette – beginnend mit der photographischen Entwicklung des belichteten Silberhalogenids bis zur Abspaltung des Bildfarbstoffes – ablaufen kann. Es ist daher ohne weiteres möglich, die Diffusionsfesten SR-Verbindungen in getrennten Schichten anzuordnen, die bevorzugterweise selbstverständlich den Silberhalogenidemulsionsschichten benachbart sind. Dabei ist in bekannter Weise darauf zu achten, daß die einer für ein bestimmtes Spektralgebiet empfindlichen Silberhalogenidemulsionsschicht zugeordneten SR-Verbindungen, die einen dazu angepaßten abspaltbaren Farbstoffteil enthalten, nicht durch diffundierende Produkte aus Silberhalogenidemulsionsschichten anderer spektraler Empfindlichkeit nachteilig beeinflußt werden. Selbstverständlich ist dafür zu sorgen, daß die Silberhalogenidemulsionsschichten bzw. eventuelle Nachbarschichten mit den SR-Verbindungen für den photographischen alkalischen Entwickler permeabel sind.

Die in der erfindungsgemäßen Weise zu verwendenden SR-Verbindungen lassen sich bevorzugt für solche Farbdiffusionsverfahren verwenden, die zur Herstellung sogenannter Colorsofortbilder geeignet sind.

Derartige Verfahren und Materialien sind bekannt und in zahlreichen Patentschriften beschrieben. Verwiesen wird z. B. auf die zusammenfassenden Ausführungen in der EP-A2-4 399.

Ein für die Herstellung von Colorsofortbildern geeignetes photographisches Material ist im Prinzip wie folgt aufgebaut:

Ein lichtempfindlicher Aufzeichnungsteil mit den Silberhalogenidemulsionsschichten üblicher spektraler Empfindlichtkeit und den hinsichtlich der Farbe angepaßten SR-Verbindungen;
eine Bildempfangsschicht, die sowohl für das alkalische Entwicklermedium als auch für die bei der reduktiven Abspaltungsreaktion erzeugten diffusionsfähigen Bildfarbstoffe durchlässig ist;
Mittel für die Aufbewahrung und gleichmäßige Verteilung des alkalischen Entwicklermediums, vorzugsweise Entwicklerpasten, innerhalb des photographischen Materials, z. B. in einem Behälter, der so angeordnet und aufgebaut ist, daß sich der Behälter bei Einwirkung von Druck öffnet und das Entwicklermedium sich innerhalb des photographichen Materials gleichmäßig verteilt.

Die Verarbeitung zur Bildung des farbigen Bildes erfolgt dann in der Weise, daß zunächst bildmäßig belichtet und dann für die Verteilung der alkalischen Entwicklerflüssigkeit oder -paste innerhalb des photographischen Aufzeichnungsmaterials gesorgt wird, wobei während der Einwirkung der alkalischen Entwicklerflüssigkeit eine ED-Verbindung bzw. ED-Vorläuferverbindung sowie ein Elektronenübertragungsmittel (im allgemeinen der photographische Entwickler) vorhanden sein muß. Das Silberhalogenid in den lichtempfindlichen Schichten wird an den belichteten Stellen proportional zur Belichtung entwickelt und an den nicht belichteten Stellen wird in umgekehrter Proportion zur Entwicklung die SR-Verbindung reduktiv gespalten und die diffusionsfähige, photographisch wirksame Verbindung (im allgemeinen ein Farbstoff) freigesetzt. Diese diffundiert dann bildmäßig in die Bildempfangsschicht.

Bei photographischen Sofortmaterialien eines sogenannten integralen Aufbaus befindet sich vorzugsweise zwischen der Bildempfangsschicht und den lichtempfindlichen Schichten eine lichtreflektierende und eine opake lichtabsorbierende Schicht.

Derartige sogenannte integrale Aufbauten des photographischen Materials sind in den US-A-2 543 181 und 3 053 659 sowie später in der DE-B-1 924 430 beschrieben worden. Diese photographischen Colorsofortbildmaterialien sind dadurch gekennzeichnet, daß die Entwicklung und Bildung des Farbstoffbildes außerhalb der Kamera erfolgt und daß die Belichtung und Betrachtung des entstandenen Farbbildes von verschiedenen Seiten des photographischen Materials erfolgt. Die alkalische Entwicklerflüssigkeit wird dabei im allgemeinen zwischen den lichtempfindlichen Silberhalogenidemulsionsschichten und einem transparenten Deckblatt verteilt. Der Entwicklerflüssigkeit werden außerdem Trübungsmittel wie Farbstoffe oder Pigmente zugesetzt. Auf diese Weise wird durch die Ausbildung einer lichtundurchlässigen Schicht des verteilten Entwicklers in Kombination mit der oben erwähnten opakten lichtabsorbierenden Schicht und reflektierenden Schicht zwischen lichtempfindlichen Schichten und Bildempfangsschicht erreicht, daß eine nachteilige uniforme Belichtung der lichtempfindlichen Schichten nach Austritt des Materials aus der Kamera verhindert ist. Bei Anwendung bestimmter Maßnahmen lassen sich mit photographischen Aufzeichnungsmaterialien, die die erfindungsgemäßen SR-Verbindungen enthalten, auch positive Farbstoffbilder herstellen, bei denen es sich nicht um Farbübertragungsbilder handelt, sondern um Farbbilder, die aus den in den lichtempfindlichen Silberhalogenidemulsionsschichten zurückgehalten, nicht reduktiv gespaltenen SR-Verbindungen bestehen (»retained image«). Derartige Ausführungsformen sind z. B. in DE-A-2 809 716 beschrieben.

Wie bereits weiter oben erwähnt, werden die SR-Verbindungen in Kombination mit einer ED-Verbindung verwendet, um durch reduktive Spaltung die diffusionsfähige, photographisch wirksame Verbindung bildweise freizusetzen. Die ED-Verbindung wird an den belichteten Stellen bildmäßig oxidiert oder inaktiviert, bevor sie mit der SR-Verbindung reagieren kann. Auf diese Weise wird die Bildumkehr bei der reduktiven Spaltung der SR-Verbindung erreicht.

Unter einer ED-Verbindung wird allgemein eine solche verstanden, die mit den in der erfindungsgemäßen Weise zu verwendenden SR-Verbindungen reaktionsfähig ist.

Die ED-Verbindung wird zweckmäßig in Kombination mit einer Elektronen übertragenden Verbindung (im folgenden ETA-Verbindung genannt) verwendet. Die ETA-Verbindung soll möglichst die Eigenschaften eines Silberhalogenidentwicklers besitzen, der auf das Silberhalogenid stärker reduzierend wirken kann als die ED-Verbindung, d. h. die ETA-Verbindung soll bei der photographischen Entwicklungsreaktion an den belichteten Stellen verbraucht werden, bevor sie mit der ED-Verbindung reagieren kann. Aufgrund ihrer geringeren Reaktivität hinsichtlich des belichteten Silberhalogenids hat die ED-Verbindung, falls sie photographisch Entwicklereigenschaften besitzt, keine Gelegenheit, bei der photographischen Entwicklungsreaktion mitzuwirken. Nach der photographischen Entwicklung liegt in dem photographischen Material in den unbelichteten Schichtteilen, in denen keine photographiche Entwicklung stattgefunden hat, bildmäßig verteilt, und zwar umgekehrt zu dem belichteten Bild, die unverbrauchte ETA-Verbindung vor, die dann in diesen Schichtteilen mit der ED-Verbindung reagieren kann.

Auf diese Weise erreicht man eine zeitliche Differenzierung der zu dem Gesamtreaktionsmechanismus gehörenden Teilreaktion in dem Sinne, daß zeitlich getrennt zunächst die photographische Entwicklungsreaktion stattfindet, dann die bildmäßige Desaktivierung der ED-Verbindung und schließlich die reduktive Spaltung der SR-Verbindung durch Reaktion mit der ED-Verbindung.

Diese gewünschte zeitliche Differenzierung kann noch weiter verbesserte werden, z. B. dadurch, daß die ED-Verbindung und die SR-Verbindung heterodispers verteilt in der photographischen Schicht, z. B. in feinverteilten Tröpfchen eines sogenannten Ölbildners, enthalten sind, während die ETA-Verbindung in dem hydrophilen Schichtbindemittel enthalten ist.

Gemäß einer besonders bevorzugten Ausführungsform werden nicht ED-Verbindungen, sondern sogenannte ED-Vorläuferverbindungen eingesetzt. Hierunter werden allgemein solche Verbindungen verstanden, die die für die reduktive Spaltung der SR-Verbindungen erforderliche reduktionsaktive Funktion in chemisch verkappter Form enthalten. Erst bei bestimmten pH-Werten werden die ED-Vorläuferverbindungen in ED-Verbindungen überführt, die dann erst befähigt sind, mit der SR-Verbindung zu reagieren. Hierdurch erreicht man eine weitere zeitliche Differenzierung der Reaktionsabläufe und damit verbesserte Möglichkeiten, den gesamten Mechanismus zu steuern:

Als ETA-Verbindungen sind im allgemeinen die üblichen photographischen Entwickler geeignet, z. B. Hydrochinon oder Derivate davon wie 2,5-Dichlorhydrochinon und 2-Chlorhydrochinon; Aminophenol-Verbindungen wie 4-Aminophenol, N-Methylaminophenol, 3-Methyl-4-aminophenol oder 3,5-Dibromaminophenol; Brenzkatechin oder Derivate davon wie 4-Cyclohexylbrenzkatechin, 3-Methoxybrenzkatechin und 4-(N-Octadecylamino)brenzkatechin; Phenylendiamin-Entwickler wie N,N-Diethyl-p-phenylendiamin, 3-Methyl-N,N-diethyl-p-phenylendiamin, 3-Methoxy-N-ethyl-N-ethoxy-N,N-diethyl-p-phenylendiamin, 3-Methoxy-N-ethyl-N-ethoxy-p-phenylendiamin oder N,N,N',N'-Tetramethyl-p-phenylendiamin.

Bevorzugt brauchbar als ETA-Verbindungen sind jedoch photographische Entwickler des 3-Pyrazolidon-Typs, z. B.

1-Phenyl-3-pyrazolidon, 1-Phenyl-4,4-dimethyl-3-pyrazolidon,
4-Hydroxymethyl-4-methyl-1-phenyl-3-pyrazolidon,
1-Phenyl-4-methyl-3-pyrazolidon, 1-Phenyl-5-methyl-3-pyrazolidon,
1-Phenyl-4,4-bis-(hydroxymethyl)-3-pyrazolidon,
1,4-Dimethyl-3-pyrazolidon, 4-Methyl-3-pyrazolidon,
4,4-Dimethyl-3-pyrazolidon, 1-(3-Chlorphenyl)-4-methyl-3-pyrazolidon,
1-(4-Chlorphenyl)-4-methyl-3-pyrazolidon, 1-(3-Chlorphenyl)-3-pyrazolidon,
1-(4-Chlorphenyl)-3-pyrazolidon, 1-(4-Tolyl)-4-methyl-3-pyrazolidon,
1-(2-Tolyl)-4-methyl-3-pyrazolidon, 1-(4-Tolyl)-3-pyrazolidon,
1-(3-Tolyl)-3-pyrazolidon, 1-(3-Tolyl)-4,4-dimethyl-3-pyrazolidon,
1-(2-Trifluorethyl)-4,4-dimethyl-3-pyrazolidon und 5-Methyl-3-pyrazolidon.

Die für das jeweilige spezielle System optimal wirkenden ETA-Verbindungen können durch übliche Routineversuche unschwer ermittelt werden. Selbstverständlich ist es auch möglich, Kombinationen mehrerer ETA-Verbindungen einzusetzen.

Die ETA-Verbindungen bzw. photographischen Entwickler können auf verschiedene Weise dem in dem photographischen Material ablaufenden Reaktionsmechanismus zugeführt werden. Sie können z. B. der Entwicklerflüssigkeit zugesetzt werden und mit dieser in üblicher Weise zur Anwendung kommen. Sie können auch ganz oder teilweise einer Schicht oder mehreren Schichten des photographischen Materials zugesetzt werden, z. B. einer oder mehrerer der lichtempfindlichen Silberhalogenidemulsionsschichten, Hilfsschichten, Zwischenschichten oder auch Bildempfangsschichten.

Als ED-Verbindungen bzw. ED-Vorläuferverbindungen sind die für diesen Zweck bereits beschriebenen brauchbar. Einige Beispiele für solche Verbindungen werden weiter unten gegeben.

Die ED-Verbindungen bzw. ED-Vorläuferverbindungen werden vorzugsweise so in das photographische Material eingebracht bzw. das photographische Material so aufgebaut, daß diese nur für die Entstehung des jeweiligen Teilfarbenbildes wirksam werden können. Wie bereits weiter oben erwähnt, enthält ein photographisches Material zur Herstellung von Farbbildern in naturgetreuen Farben drei Schichteinheiten zur Herstellung der drei Teilfarbenbilder, und zwar eine blauempfindliche Silberhalogenidemulsionsschicht mit Mitteln zur Entstehung des gelben Teilfarbenbildes, eine grünempfindliche Silberhalogenidemulsionsschicht mit Mitteln zur Herstellung des purpurfarbenen Teilfarbenbildes und schließlich eine Schichteinheit mit einer rotempfindlichen Silberhalogenidemulsionsschicht und Mitteln zur Herstellung des blaugrünen Teilfarbenbildes. Die ED-Verbindungen bzw. ED-Vorläuferverbindungen werden nun so eingesetzt, daß sie jeweils nur in der ihnen zugeordneten Schichteinheit wirksam werden. Dies kann z. B. dadurch erreicht werden, daß die betreffenden Schichteinheiten durch

Zwischenschichten getrennt sind, die Verbindungen zum Abfangen der ED-Verbindungen bzw. ED-Vorläuferverbindungen enthalten. Eine andere Möglichkeit, die Wirkung der ED-Verbindungen bzw. ED-Vorläuferverbindungen auf die betreffende Schichteinheit zu beschränken, besteht darin, diese Verbindungen in diffusionsfester Form einzulagern. Dies wird mit den üblichen Mitteln erreicht, z. B. durch Substitution mit Ballastgruppen, im allgemeinen langkettigen Alkylresten, oder durch Inkorporierung in heterodisperser Form, gelöst in sogenannten Ölbildern. Die hierfür erforderlichee Technik ist aus der Einbringung von Farbkupplern in konventionelle farbphotographische Materialien bekannt.

Wie bereits weiter oben erwähnt, ist es besonders vorteilhaft, sogenannte ED-Vorläuferverbindungen zu verwenden. Man erreicht dadurch einen besonders hohen Grad an Bildauflösung und vermeidet die Bildung von Farbschleiern. Diese Forderungen sind von besonders großer Bedeutung bei den weiter oben erwähnten Materialien zur Herstellung naturgetreuer Farbbilder mit mehreren Schichteinheiten zur Bildung der erforderlichen Teilfarbenbilder. Das Wirkungsprinzip der ED-Vorläuferverbindungen wurde bereits weiter oben beschrieben. Aufgrund der Instabilität in alkalischen pH-Wert-Bereichen werden die ED-Vorläuferverbindungen hydrolytisch in die ED-Verbindungen überführt. Aufgrund der begrenzten Hydrolysegeschwindigkeit der ED-Vorläuferverbindungen kann durch Auswahl einer für das jeweilige spezielle Reaktionssystem eine besonders geeignete ED-Vorläuferverbindung ausgewählt und so der Gesamtmechanismus in optimaler Weise gesteuert werden. An den belichteten Stellen reagiert die durch Hydrolyse der ED-Vorläuferverbindung entstehende ED-Verbindung sofort mit der oxidierten ETA-Verbindung (oxidierter photographischer Entwickler) und verliert damit die Fähigkeit, die CR-Verbindung relativ zu spalten. Bei der Reaktion mit der oxidierten Entwicklersubstanz wird diese reduziert; sie steht damit für die Entwicklung weiteren belichteten Halogensilbers zur Verfügung.

An den unbelichteten Stellen dagegen reagiert die hydrolytisch aus der ED-Vorläuferverbindung entstehende ED-Verbindung, da in diesen Schichtbereichen kein oxidierter photographischer Entwickler zur Verfügung steht, sofort mit der SR-Verbindung unter reduktiver Spaltung und Bildung der diffusionsfähigen, photographisch wirksamen Verbindung, vorteilhafterweise eines Bildfarbstoffes.

Auch bei der Verwendung von ED-Vorläuferverbindungen ist es vorteilhaft, diese in diffusionsfester Form, d. h. substituiert mit Ballastgruppen bzw. in heterodisperser Verteilung anzuwenden. Wie bereits erwähnt, erfolgt die heterodisperse Einlagerung durch Lösung der ED-Vorläuferverbindung in sogenannten Ölbildern und Einemulgierung der organischen Lösung in die wäßrige Gießlösung für die jeweilige Schicht. Dabei können die ED-Vorläuferverbindung und die SR-Verbindung entweder in getrennten Lösungen eingearbeitet werden, in vielen Fällen ist es jedoch vorteilhaft, die ED-Vorläuferverbindung gemeinsam mit der SR-Verbindung einzuarbeiten, so daß diese beiden Reaktionspartner gemeinsam in den Tröpfchen des Ölbildners enthalten sind.

Da die Reaktion der reduktiven Spaltung wiederum mit einer bestimmten Geschwindigkeit abläuft und diese Geschwindigkeit von der Art der Reaktionspartner abhängig ist, gelingt es durch geeignete Auswahl des Reaktionspaares ED-Verbindung und SR-Verbindung, die Entstehung der diffusionsfähigen photographisch wirksamen Verbindung zu steuern und dadurch optimale Ergebnisse zu erreichen. Die Konzentration der ED-Verbindungen bzw. der ED-Vorläuferverbindungen in den Schichteinheiten des photographischen Materials kann innerhalb weiter Grenzen schwanken. Im allgemeinen haben sich Konzentrationsverhältnisse von ED-Verbindung bzw. ED-Vorläuferverbindung zur SR-Verbindung von 1 : 2 bis 2 : 1, vorzugsweise 1 : 1 bis 2 :1, als brauchbar erwiesen.

Als ED-Verbindungen bzw. ED-Vorläuferverbindungen sind beispielsweise die folgenden geeignet:

Verbindungen des Isoxazolon-Typs gemäß DE-OS 2 809 716

ED 1

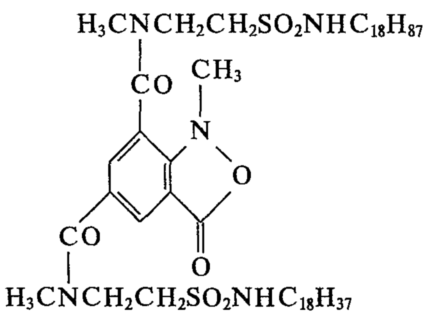

Sulfonylaminonaphthole

ED 2

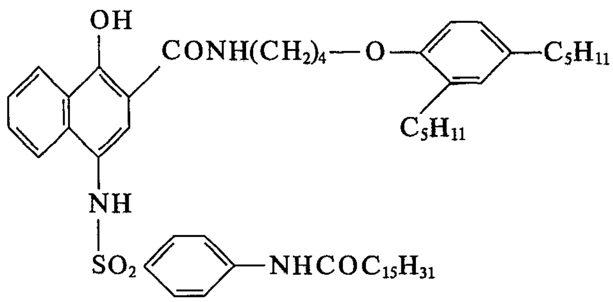

p-Phenylendiamin-Verbindungen

ED 3

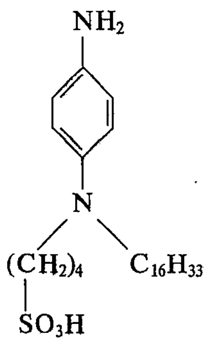

Diffusionsfeste Hydrochinon-Derivate

ED 4

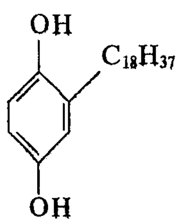

ED 5

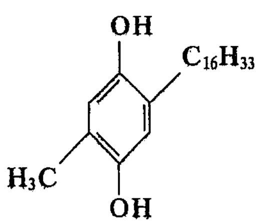

ED 6

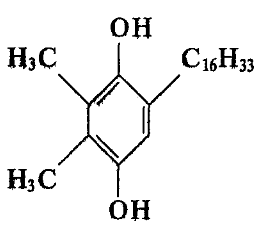

ED 7

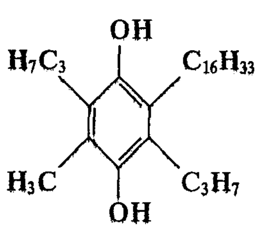

Verkappte Aminophenol-Derivate als ED-Vorläuferverbindungen

ED 8

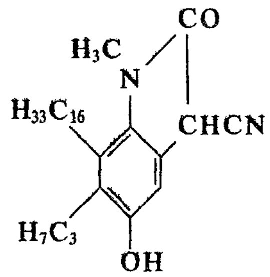

Benzofuran-Derivate als ED-Vorläuferverbindungen gemäß DE-A-3 006 268

ED 9

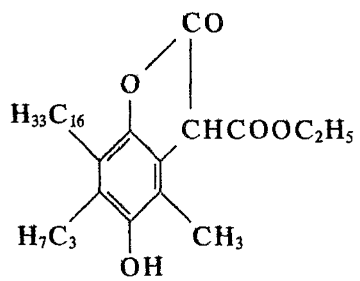

ED 10

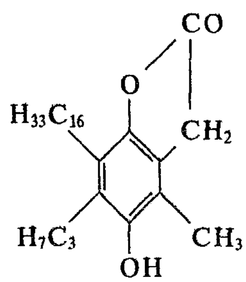

ED 11

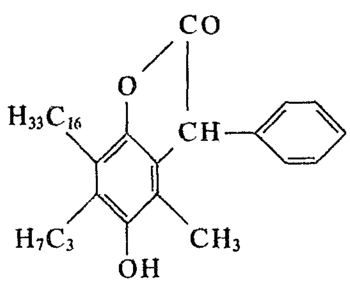

ED 12

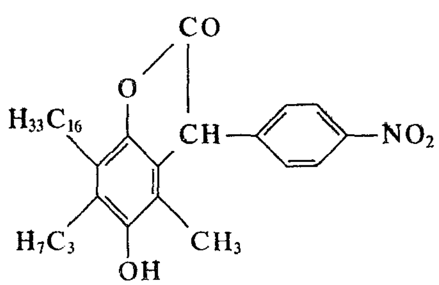

ED 13

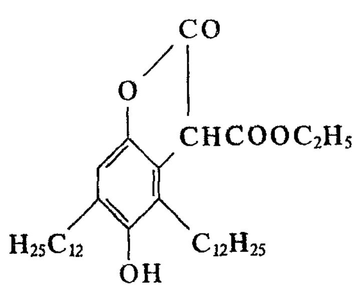

ED 14

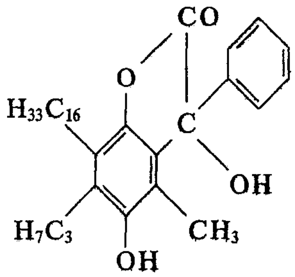

ED 15

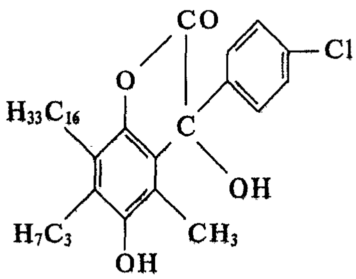

ED 16

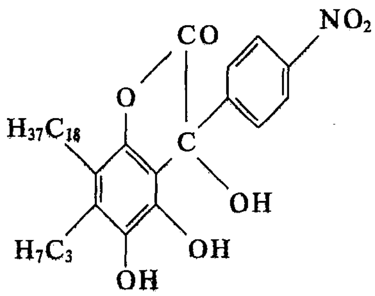

ED 17

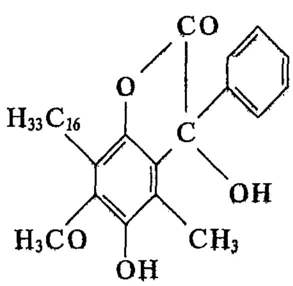

Mercapto-Verbindungen

ED 18 $H_{29}C_{14}SH$

ED 19

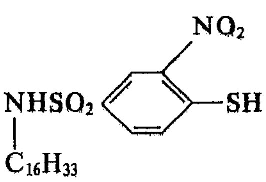

ED 20

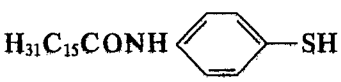

Bevorzugt für die Kombination mit den erfindungsgemäßen SR-Verbindungen sind als ED-Vorläuferverbindungen 5- oder 6-gliedrige $\alpha$-Lactone des Phenols, wobei der Phenolring in 2- oder 4-Stellung zu der lactonisierten Phenolgruppe eine Hydroxyl- oder eine Aminogruppe an den Benzolring gebunden enthält und wobei der Lactonring Elektronen anziehende Substituenten enthält, die eine hydrolytische Aufspaltung des Lactonringes zur Bildung der ED-Verbindung bei pH-Werten zwischen 10 und 13 bewirken.

Deartige ED-Vorläuferverbindungen sind in der DE-A-3 006 268 beschrieben. Von ganz besonderer Bedeutung für die Verwendung in Kombination mit den erfindungsgemäßen SR-Verbindungen sind die

ED-Vorläuferverbindungen des Typs der genannten Verbindungen ED 14 bis ED 17, die sich durch die folgende allgemeine Formel definieren lassen:

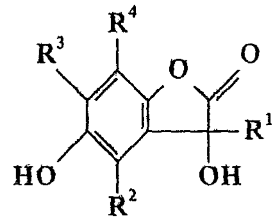

(III)

worin bedeuten:

$R^1$ einen carbocyclischen oder heterocyclischen aromatischen Rest;

$R^2$, $R^3$, $R^4$ gleiche oder verschiedene Substituenten, und zwar Wasserstoff, Alkyl, Alkenyl, Aryl, Alkoxy, Alkylthio, Amino oder

$R^3$ und $R^4$ vervollständigen zusammen einen ankondensierten, insbesondere carbocyclischen Ring und wobei mindestens einer der Substituenten $R^1$, $R^2$, $R^3$ und $R^4$ einen die Diffusion erschwerenden Ballastrest mit 10–22 C-Atomen enthält.

Durch die Kombination dieser ED-Vorläuferverbindungen mit den erfindungsgemäßen SR-Verbindungen werden ausgezeichnete Farbdichten und Farbbilder praktisch ohne störenden Schleier erhalten. Die ED-Vorläuferverbindungen werden den photographischen Schichten wie in der DE-A-30 06 268 zugesetzt.

Unter dem Rest einer photographisch wirksamen Verbindung ($R^3$ in der oben beschriebenen allgemeinen Formel I) werden solche Reste verstanden, die nach der reduktiven Spaltung in diffusionsfähiger Form bei photographischen Aufzeichnungsverfahren eine photographich wirksame Funktion besitzen.

So kann dieser Rest einen Farbstoff oder eine Farbstoff-Vorläuferverbindung darstellen. Ferner kann dieser Rest auch in Form diffusionsfähiger Verbindungen abgespalten werden, die in anderer Richtung photographisch wirksam werden, z. B. als Stabilisator zur Vermeidung der Schleierbildung, als Toner, als Fixiermittel, als Entwickler oder Entwicklungsbeschleuniger, als Härtungsmittel, als Silberhalogenidlösungsmittel, als Entwicklungsinhibitor oder ähnlichen. Die diffusionsfähige, photographisch wirksame Verbindung entsteht bei der reduktiven Abspaltung gemäß dem weiter oben angegebenen Reaktionsschema mit einer $SO_2$—$NH_2$-Gruppe aus der Bindung mit dem Trägerrest.

Da die in der erfindungsgemäßen Weise zu verwendenden SR-Verbindungen besonders geeignet sind für die Herstellung photographischer Farbbilder, sind solche SR-Verbindungen bevorzugt, die als diffusionsfähigen, photographisch wirksamen Rest einen farbstoffbildenden Rest enthalten. Es kann sich dabei um einen Rest handeln, der einen fertigen vorgebildeten Farbstoff darstellt, einen sogenannten verschobenen Farbstoff (»shifted dye«), oder ein Farbstoff-Vorläuferprodukt. Als vorgebildete Farbstoffe oder als Farbstoffe, die später gebildet werden, sind dabei die für photographische Bildfarbstoffe üblichen geeignet, z. B. Azofarbstoffe einschließlich metallisierbarer Azofarbstoffe und metallisierter Azofarbstoffe, Azomethin(imin)farbstoffe, Anthrachinon-, Alizarin-, Merocyanin-, Chinolin- und Cyaninfarbstoffe und dergleichen.

Geeignete Farbstoffreste sind im einzelnen insbesondere in den deutschen Offenlegungsschriften 2 242 762 und 2 505 248 beschrieben. Ferner sei verwiesen auf die deutschen Offenlegungsschriften 2 626 821 und 2 756 656 für gelbe Bildfarbstoffe, 2 406 626, 2 406 627 und 2 503 443 für purpurfarbene Farbstoffe sowie 2 406 653, 2 462 010 und 2 607 440 für blaugrüne Bildfarbstoffe.

Geeignete metallisierbare oder metallisierte Farbstoffe als photographisch wirksamer Rest für die in der erfindungsgemäßen Weise zu verwendenden SR-Verbindungen sind in den US-Patentschriften 4 165 238, 4 165 987, 4 183 754 und 4 183 755 beschrieben.

Unter sogenannten »verschobenen Farbstoffen« werden solche verstanden, bei denen sich die Absorptionseigenschaften hypsochrom oder bathochrom verschieben, wenn die Farbstoffe einer Milieuänderung unterworfen werden, z. B. durch Änderung des pH-Wertes, oder chemisch verändert werden, z. B. durch Bildung von Metallkomplexen oder die Abspaltung eines Substituenten aus dem chromophoren System des Farbstoffes, wie in der US-A-3 260 597 beschrieben. Die »verschobenen Farbstoffe« sind deshalb vorteilhaft, weil ihre Absorptionsbereiche zunächst außerhalb des Bereiches der Lichtempfindlichkeit der zugehörigen Silberhalogenidemulsionen liegen, so daß keine Erniedrigung der Lichtempfindlichkeit möglich ist. Erst im Laufe der Verarbeitung, z. B. in der Bildempfangsschicht, werden diese Farbstoffe durch die genannten Einwirkungsmöglichkeiten in solche überführt, die in dem gewünschten Absorptionsbereich der Bildfarbstoffe absorbieren.

Unter »diffusionsfähigen, photographisch wirksamen Resten«, die bei der reduktiven Abspaltung eine Farbstoff-Vorläuferverbindung freisetzen, werden solche verstanden, die zunächst praktisch farblos sind, jedoch bei der photographischen Verarbeitung durch chemische Reaktion in einen Bildfarbstoff überführt werden. Geeignete Farbstoff-Vorläuferreste sind z. B. oxychromogene Verbindungen oder Farbkupplerreste.

Im Falle von diffusionsfähigen Farbkupplerresten werden diese wie üblich bei der reduktiven Abspaltung bildmäßig freigesetzt.

Als Farbkupplerreste geeignet sind die in der konventionellen Farbphotographie üblichen Verbindungen wie Pyrazolonkuppler für die Herstellung von Purpurfarbstoffen, offenkettige Ketomethylen-Verbindungen für die Herstellung von gelben Bildfarbstoffen oder Phenol- oder Naphthol-Derivate für die Herstellung von blaugrünen Bildfarbstoffen. Die Bildung des Bildfarbstoffes erfolgt durch übliche Reaktion mit einem oxidierten Farbentwickler, insbesondere des Phenylendiamin-Typs. Diese oxidierten Farbentwickler können in bestimmten Schichten, der Funktion nach Bildempfangsschichten, bevorzugt diffusionsfest eingelagert sein. Sobald der bildmäßig diffundierende Farbkuppler diese Schichten erreicht, bildet sich der gewünschte Bildfarbstoff. Hinsichtlich geeigneter diffusionsfester Farbkuppler wird auf die US-A-3 620 747 verwiesen.

Im Falle von oxychromogenen Verbindungen als diffusionsfähige, aus der SR-Verbindung abspaltbare Reste handelt es sich um solche, die zunächst keine chromophonen Gruppen besitzen und daher farblos sind. Sie können nach der Abspaltung ebenfalls in geeignete Schichten diffundieren und dort z. B. durch Oxidation aufgrund von Lufteinwirkung oder dem Zusatz weiterer Oxidationsmittel in die Bildfarbstoffe überführt werden. Man bezeichnet derartige oxychromogene Verbindungen auch als Leuco-Verbindungen. Derartige Leuco-Verbindungen sind an sich bekannt, z. B. Leuco-Indoaniline, Leuco-Indophenole oder Leuco-Anthrachinone. Verwiesen wird auf die US-A-3 808 658.

SR-Verbindungen, die als diffusionsfähige, photographisch wirksame Reste andere als Bildfarbstoff bildende enthalten, werden den photographischen Materialien in ähnlicher Weise zugesetzt wie die SR-Verbindungen, die die Bildfarbstoffe bei der reduktiven Spaltung liefern, d. h. je nach Art des photographisch wirksamen Restes in der lichtempfindlichen Silberhalogenidemulsionsschicht oder hierzu benachbarten Schichten. Je nach Funktion und der gewünschten Wirkung sind Konzentrationen von 0,01 bis 1 g pro $m^2$ anwendbar. Im Falle von Entwicklungsinhibitoren oder Stabilisatoren als photographisch wirksame, diffusionsfähige Reste werden die SR-Verbindungen im photographischen Material so eingesetzt, daß sie in Kontakt mit den Silberhalogenidemulsionen wirken können. An den unbelichteten Stellen entsteht dann in bildmäßiger Verteilung der Entwicklungsinhibitor oder der Stabilisator. Dies hat zur Folge, daß die Bildung von entwickeltem Silber, d. h. von unerwünschtem Schleier, in den wenig oder nicht belichteten Schichtbereichen wirksam unterdrückt wird. Da die Bildung von entwickeltem Silber durch Desaktivierung der ED-Verbindungen bzw. ED-Vorläuferverbindungen die Bildung von Farbstoffen unterdrückt, wird bei der gleichzeitigen Verwendung von farbstoffbildenden SR-Verbindungen mit SR-Verbindungen, die Entwicklungsinhibitoren in Freiheit setzen, an den nicht belichteten Stellen die Farbstoffbildung begünstigt und dadurch die Bildfarbstoffdichte erhöht.

Wie bereits erwähnt, liegt der Vorteil der in der erfindungsgemäßen Weise zu verwendenden SR-Verbindungen darin, daß bei der Bildung des Farbstoffes eine Bildumkehr erfolgt und somit negative Silberhalogenidemulsionen in den lichtempfindlichen Schichten verwendet werden können. Es ist jedoch selbstverständlich, daß für Spezialmaterialien, die eine andere Art von Bildumkehr erfordern, die erfindungsgemäßen SR-Verbindungen auch in Kombination mit direkt-positiven Silberhalogenidemulsionen oder Umkehremulsionen verwendet werden können.

Trotz der unterschiedlichen Anwendungsmöglichkeiten der erfindungsgemäßen SR-Verbindungen, besteht die wichtigste Anwendung in der Herstellung von Farbbildern. Sie werden für diesen Zweck in Mengen verwendet, die ausreichen müssen, um ein Farbbild ausreichender Dichte zu erhalten. Wenn auch die gewünschte Farbdichte noch von anderen Faktoren abhängt, wie Dicke der Schicht und Absorptionseigenschaften des freigesetzten diffusionsfähigen Farbstoffs, so hat es sich doch als zweckmäßig erwiesen, die SR-Verbindungen in Konzentrationen von mindestens $10^{-5}$ Mol pro $m^2$, vorzugsweise $10^{-4}$ bis $2 \cdot 10^{-3}$ Mol pro $m^2$ einzusetzen.

Die Konzentrationsverhältnisse der erfindungsgemäßen SR-Verbindungen zu den anderen Komponenten des Reaktionsmechanismus werden von Fall zu Fall durch übliche Routineversuche ermittelt werden können. Im allgemeinen werden die folgenden Molverhältnisse ausreichen:

1 Mol SR-Verbindung: 1 bis 5 Mol ED-Verbindung: 2 bis 20 Mol Silberhalogenid, vorzugsweise
1 Mol SR-Verbindung: 1,5 Mol ED-Verbindung: 5 Mol Silberhalogenid.

Wenn auch die wichtigste Verwendung der SR-Verbindungen darin liegt, farbige Bilder durch Verwendung der reduktiv abgespaltenen Bildfarbstoffe zu erzeugen, so ist es grundsätzlich jedoch auch möglich, die in den ursprünglichen Schichten zurückbleibenden, nicht gespaltenen SR-Verbindungen zur Herstellung von farbigen Bildern durch bekannte zusätzliche Maßnahmen zu verwenden.

Die für die erfindungsgemäßen photographischen Materialien geeigneten lichtempfindlichen Silberhalogenidemulsionsschichten besitzen die übliche Zusammensetzung.

Als Silberhalogenide sind Silberchlorid oder Silberbromid allein oder im Gemisch, gegebenenfalls mit einem Gehalt an Silberiodid bis zu 10 Mol-%, brauchbar. Die Größe der Silberhalogenidkörner kann innerhalb weiter Grenzen schwanken. Im allgemeinen werden Korngrößen zwischen 0,3 und 5 μm angewendet werden.

Als Schichtbindemittel werden ebenfalls die üblichen für wäßrige alkalische Lösungen durchlässigen hydrophilen polymeren Bindemittel verwendet werden, vorzugsweise Gelatine, die jedoch ganz oder teilweise durch andere synthetische hydrophile Polymere ersetzt werden kann. Insbesondere für Farbübertragungsverfahren kann es günstig sein, für bestimmte Zwecke solche hydrophile Kolloidschichten zu verwenden, deren Durchlässigkeit gegenüber den diffusionsfähigen Verbindungen, insbesondere den Farbstoffen, pH-abhängig ist. Derartige Polymere sind an sich für photographische Materialien bekannt. Sie zeichnen sich dadurch aus, daß sie saure Gruppen besitzen. Für die Bildempfangsschicht können ebenfalls die bekannten Schichtbindemittel verwendet werden. Im allgemeinen handelt es sich hier um sogenannte polymere Beizen, die die Fähigkeit besitzen müssen, die in diese Schicht diffundierenden Bildfarbstoffe festzuhalten und an weiterer Diffusion zu hindern. Die Bildfarbstoffe bzw. die polymeren Beizen können durch geeignete Auswahl zur Erzielung optimaler Ergebnisse einander angepaßt werden.

Im übrigen können die photographischen Materialien zur Herstellung von Farbübertragungsbildern die übliche Zusammensetzung besitzen und über die Bildempfangsschicht und die lichtempfindlichen Schichten hinaus die an sich bekannten Hilfsschichten enthalten, z. B. solche, die nach der Entwicklung und Farbstoffbildung den pH-Wert innerhalb des Schichtverbandes erniedrigen.

Derartige Schichten und Maßnahmen zur Steuerung der pH-Erniedrigung sind an sich bekannt. Es liegt im Rahmen von Routinemaßnahmen, ein für den jeweiligen Zweck optimales Material unter Zuhilfenahme der bekannten Mittel aufzubauen.

Für die Entwicklung der erfindungsgemäßen photographischen Materialien sind alkalische Entwicklungsflüssigkeiten oder -pasten üblicher Zusammensetzung geeignet. Als Alkalien kommen z. B. Alkalimetallhydroxide, insbesondere Natriumhydroxid oder Carbonate oder geeignete Amine, beispielsweise Diethylamin, zur Anwendung. Die Entwickler besitzen einen pH-Wert im üblichen Bereich von vorzugsweise über 12. Sie enthalten die üblichen Entwicklerverbindungen, die weiter oben bereits genannt wurden. Zur Erhöhung der Viskosität der Entwickler werden die üblichen Zusätze angewendet, wie natürliche oder synthetische Polymere relativ hohen Molekulargewichtes.

Als Schichtträger für die erfindungsgemäßen photographischen Materialien sind ebenfalls die üblichen geeignet, wie Folien aus Cellulosetriacetat, Polyestern, wie Polyethylenterephthalat und andere.

Die in der erfindungsgemäßen Weise zu verwendenden SR-Verbindungen bzw. ED-Verbindungen oder ED-Vorläuferverbindungen werden nach an sich bekannten Methoden in die gewünschten Schichten des photographischen Materials inkorporiert. Wie bereits oben erwähnt, ist es in vielen Fällen vorteilhaft, die genannten Verbindungen in heterodisperser Form in die hydrophilen Schichtbindemittel einzubringen, beispielsweise unter Verwendung von Lösungsmitteln und geeigneten Verfahren.

Verwiesen wird z. B. auf die US-A-2 322 027 oder 2 801 171. Als Lösungsmittel sind im allgemeinen die geeignet, die auch für die Inkorporierung von konventionellen Farbkupplern verwendet werden, z. B. Tri-o-kresylphosphat, Di-n-butylphthalat, 2,4-Diamylphenyl oder vorzugsweise allgemein Dialkylamide von Alkansäuren mit 8 bis 22 C-Atomen, insbesondere Dialkylamide, wie Diethylamid von Laurin- oder Palmitinsäure. Weitere geeignete Lösungsmittel sind in der Zeitschrift »Product Licensing Index«, Bd. 83, Seiten 26—29, beschrieben. In gewissen Fällen kann es günstig sein, mit Wasser mischbare organische Lösungsmittel einzusetzen, wie Tetrahydrofuran, kurzkettige Alkanole, wie Methylalkohol, Ethylalkohol oder Isopropylalkohol, Aceton, 2-Butanon, N-Methylpyrrolidion, Dimethylformamid, Dimethylsulfoxid oder Mischungen hiervon. Die Einbringung der photographisch wirksamen Verbindungen kann auch mit Hilfe sogenannter beladbarer Polymerlatices erfolgen. Diese Methoden sind allgemein bekannt; verwiesen wird z. B. auf die DE-A-2 541 274.

## Photographisches Beispiel

Auf einen transparenten Schichtträger aus Cellulosetriacetat wurden in folgender Reihenfolge eine Beizschicht, eine lichtreflektierende Schicht und eine lichtempfindliche Silberhalogenidemulsionsschicht aufgetragen:

### Beizschicht

3,75 g eines Copolymerisats aus einem Teil Styrol und einem Teil Maleinsäureimid von N,N-Dimethyl-N-hexadecyl-N-$\omega$-aminopropyl-ammoniumbromid wurden in 15 ml Ethanol gelöst und diese Lösung wurde in 75 ml 5%iger Gelatinelösung eingerührt und homogenisiert. Nach Zusatz von 2,6 ml 5%iger Saponinlösung und 1 ml 2%iger wäßriger Mucochlorsäurelösung wurde auf eine übliche Gießviskosität (ca. 11 mPa · s) eingestellt und die Lösung wurde bei 40°C im Tauchverfahren auf den Träger aufgetragen.

### Lichtreflektierende Schicht

Eine Aufschlämmung aus 42 g $TiO_2$ in 2 ml Wasser wurde unter Zusatz von 5 ml 5%iger wäßriger Lösung von Natriumdodecylbenzolsulfonat und 5 ml 5%iger wäßriger Saponinlösung in 150 ml 8%iger

wäßriger Gelatinelösung dispergiert. Nach Zugabe von 1 ml 2%iger Mucochlorsäurelösung wurde die Dispersion auf eine Viskosität von 13 mPa · s bei 40°C eingestellt und im Tauchverfahren auf die getrocknete Beizschicht aufgetragen.

### Lichtempfindliche Schicht

1 mMol SR-Verbindung 1 und 1,5 mMol ED-Verbindung 14 wurden in

5 ml Essigsäureethylester gelöst und nach Zugabe von
2 ml Palmitinsäurediethylamid in
25 ml 5%iger Gelatinelösung unter Zusatz von
5 ml 5%iger wäßriger Lösung von Natriumdodecylbenzolsulfonat

in einem Homogenisator bei ca. 1000 U/min einemulgiert.

Das Emulgat wurde über ein Faltenfilter filtriert und mit 5%iger Gelatinelösung auf 75 ml aufgefüllt.

Nach Zugabe von 1 ml 2%iger Mucochlorsäurelösung wurde das Emulgat mit 32 g einer gießfertigen Silberbromidgelatineemulsion mit einem Anteil von 0,67 Mol-% AgI versetzt. Diese war hergestellt worden mit 74 g $AgNO_3$/kg Emulsion.

Das Silber/Gelatine-Verhältnis betrug 1:1,1. Die Mischungen wurden im Tauchverfahren mit einer Geschwindigkeit von 5 m/min bei ca. 40°C auf die lichtreflektierende Schicht aufgetragen. Verschiedene Proben wurden nach 24stündigem Trocknen durch ein Graustufenfilter auf der Emulsionsseite belichtet und mit einer ca. 300 µm stark aufgetragenen Entwicklerpaste der nachfolgend beschriebenen Zusammensetzung bei 18°C entwickelt, 2 Minuten in einer 5%igen Essigsäurelösung gestoppt, danach kurz gewässert und getrocknet. Bei einer ersten Probe betrug die Entwicklungszeit 1 Minute, bei einer zweiten Probe 4 Minuten.

### Entwickler

In 800 ml Wasser wurden 20 g Carbethoxymethylcellulose unter Rühren gelöst. Zu der homogenen Lösung wurden 40 g NaOH fest, 1,5 g Ethylendiamintetraessigsäure-Natriumsalz, 11,5 g Borax, 1 g Natriumhexametaphosphat, 3 g KBr, 1,6 g 1-Phenyl-4-methyl-4-hydroxymethyl-pyrazolidon-3, 0,1 g 1-Phenyl-5-mercapto-1,2,3,4-tetrazol hinzugefügt. Die Lösung wurde nun mit Wasser auf 1000 ml aufgefüllt (pH 13,8). Durch Zugabe von je 5 ml Eisessig sinkt der pH-Wert jeweils um 0,1.

Man erhält einen positiven Farbübertrag von hoher Farbbrillanz. In gleicher Weise wurden auch mit anderen SR-Verbindungen gemäß der Erfindung Farbübertragsbilder hergestellt. Die erhaltenen Farbdichten ($D_{min}$ und $D_{max}$) sind in der folgenden Tabelle angegeben.

| SR-Verbindung | Farbe | Farbdichte nach | | | |
|---|---|---|---|---|---|
| | | 1 min | | 4 min | |
| | | $D_{min}$ | $D_{max}$ | $D_{min}$ | $D_{max}$ |
| 1 | blaugrün | | | 0,10 | 0,72 |
| 3 | purpur | 0 | 0,72 | 0,02 | 1,10 |
| 4 | blaugrün | 0,08 | 1,54 | 0,08 | 1,86 |
| 5 | purpur | | | 0,05 | 0,60 |
| 6 | blaugrün | 0,12 | 0,98 | 0,22 | 1,48 |
| 11 | blaugrün | 0,08 | 1,4 | 0,16 | 1,76 |
| 12 | gelb | 0,08 | 0,56 | 0,10 | 0,76 |
| 14 | blaugrün | 0 | 0,96 | 0,04 | 1,2 |
| 15 | blaugrün | 0,06 | 1,44 | 0,14 | 1,62 |
| 16 | purpur | 0 | 0,30 | 0 | 0,44 |
| 19 | blaugrün | 0,04 | 0,42 | 0,06 | 0,70 |
| 21 | blaugrün | 0,14 | 1,22 | 0,26 | 1,72 |
| 24*) | blaugrün | 0,24 | 1,06 | 0,38 | 1,26 |
| 25 | blaugrün | 0,04 | 1,20 | 0,10 | 1,62 |

*) Verbindung 24 enthält keinen diffusionsfestmachenden Rest – (hoher Schleier).

Einen Übertrag gleicher Farbdichte erhält man auch, wenn das Testmaterial vor der Entwicklung einem Heizschrank (3 d, 57°C, 5% rel. Feuchte) oder Tropenschrank (7 d, 35°C, 85% rel. Feuchte) gelagert wird.

**Patentansprüche**

1. Photographisches Aufzeichnungsmaterial mit mindestens einer lichtempfindlichen Silberhalogenidemulsionsschicht mit einem alkalidurchlässigen Bindemittel und einer mit dieser in wirksamem Kontakt befindlichen diffusionsfesten reduzierbaren Verbindung, die eine photographisch wirksame Gruppe enthält und wobei diese reduzierbare Verbindung im reduzierten Zustand unter den alkalischen Entwicklungsbedingungen die photographisch wirksame Gruppe als diffusionsfähige Verbindung abzuspalten vermag, dadurch gekennzeichnet, daß als diffusionsfeste reduzierbare Verbindung ein Sulfilimin enthalten ist.

2. Aufzeichnungsmaterial nach Anspruch 1, dadurch gekennzeichnet, daß als diffusionsfeste reduzierbare Verbindung mindestens eine Verbindung der folgenden Formel enthalten ist:

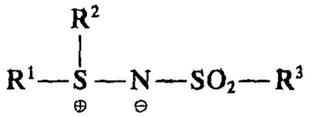

(I)

worin bedeuten

$R^1$ und $R^2$ gleiche oder verschiedene Arylreste, wobei mindestens einer der Arylreste mindestens einen elektronenanziehenden Substituenten in o- oder p-Stellung enthält und wobei mindestens

einer der Arylreste eine Ballastgruppe enthält; und
$R^3$ den Rest einer diffusionsfähigen photographisch wirksamen Verbindung.

3. Aufzeichnungsmaterial nach Anspruch 1, dadurch gekennzeichnet, daß die diffusionsfeste reduzierbare Verbindung der folgenden Formel (II) entspricht:

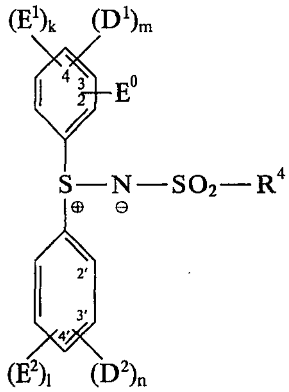

(II)

worin bedeuten

$E^0$ $-NO_2$ in 2- oder 4-Stellung;
$E^1$, $E^2$ elektronenanziehende Substituenten in 2- oder 4- (bzw. 2'- oder 4'-)Stellung;
$D^1$, $D^2$ diffusionsfestmachende Reste;
$R^4$ den Rest eines diffusionsfähigen Farbstoffes oder Farbstoffvorläufers; und
k, l, m, n jeweils 0 oder 1 mit der Maßgabe, daß $m + n \geq 1$.

4. Aufzeichnungsmaterial nach Anspruch 3, dadurch gekennzeichnet, daß $E^1$ und $E^2$ $-NO_2$, $-CF_3$, $-CN$, $-SO_2CF_3$, Carbalkoxy, Alkylsulfonyl, Alkylsulfonyl, Sulfamoyl oder Carbamoyl bedeuten.

5. Aufzeichnungsmaterial nach Anspruch 1, dadurch gekennzeichnet, daß die Silberhalogenidemulsionsschicht eine negativ arbeitende Silberhalogenidemulsion enthält und daß in wirksamem Kontakt mit der diffusionsfesten reduzierbaren Verbindung eine Elektronendonor-Verbindung oder Elektronendonor-Vorläuferverbindung enthalten ist.

6. Aufzeichnungsmaterial nach Anspruch 5, dadurch gekennzeichnet, daß als Elektronendonor-Vorläuferverbindung ein Benzofuranon-Derivat der folgenden allgemeinen Formel enthalten ist:

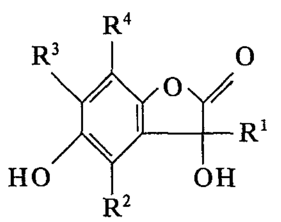

worin bedeuten:

$R^1$ einen carbocyclischen oder heterocyclischen aromatischen Rest;
$R^2$, $R^3$, $R^4$ gleiche oder verschiedene Substituenten, und zwar Wasserstoff, Alkyl, Alkenyl, Aryl, Alkoxy, Alkylthio, Amino oder $R^3$ und $R^4$ vervollständigen zusammen einen ankondensierten carbocyclischen Ring, und wobei mindestens einer der Substituenten $R^1$, $R^2$, $R^3$ und $R^4$ einen die Diffusion erschwerenden Ballastrest mit 10 bis 22 C-Atomen enthält.

7. Aufzeichnungsmaterial nach Anspruch 1, dadurch gekennzeichnet, daß es als integrale Colorsofortbild-Einheit aufgebaut ist und in folgender Reihenfolge mindestens enthält:

a) ein lichtempfindliches Aufzeichnungselement mit mindestens einer lichtempfindlichen negativen Silberhalogenidemulsionsschicht und einer dieser zugeordneten nicht-diffundierenden reduzierbaren farbgebenden Sulfiliminverbindung;
b) eine alkalidurchlässige lichtreflektierende Schicht und
c) eine Bildempfangsschicht.

8. Verbindung der folgenden Formel

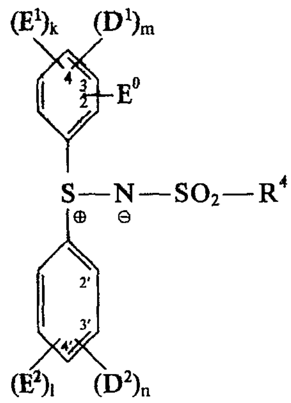

(II)

worin bedeuten:

| | |
|---|---|
| $E^0$ | $-NO_2$ in 2- oder 4-Stellung; |
| $E^1$, $E^2$ | elektronenanziehende Substituenten in 2- oder 4- (bzw. 2'- oder 4'-) Stellung; |
| $D^1$, $D^2$ | diffusionsfestmachende Reste; |
| $R^4$ | den Rest eines diffusionsfähigen Farbstoffes oder Farbstoffvorläufers und |
| k, l, m, n | jeweils 0 oder 1 mit der Maßgabe, daß $m + n \geq 1$ ist. |

9. Verbindung der Formel

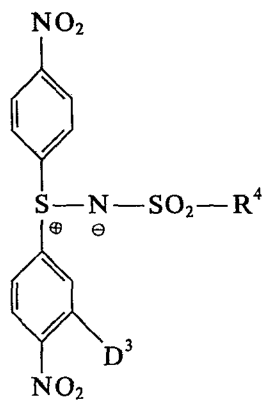

worin bedeuten:

| | |
|---|---|
| $D^2$ | einen diffusionsfestmachenden Rest und |
| $R^4$ | den Rest eines diffusionsfähigen Farbstoffs oder Farbstoffvorläufers. |

10. Verbindung der Formel

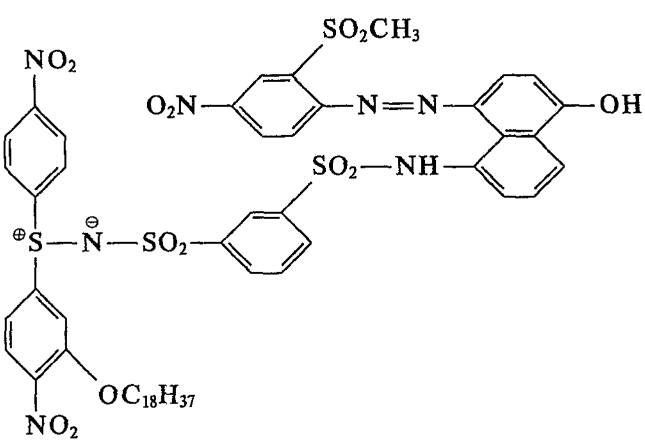

**Claims**

1. Photographic recording material containing at least one photosensitive silver halide emulsion layer with an alkalipermeable binder and a non-diffusing reducible compounde which is in effective contact with said layer and which contains a photographically active group, this reducible compound being capable in its reduced state of splitting off the photographically active group as a diffusible compound under the alkaline development conditions, characterised in that said photographic recording material contains a sulphilimine as the non-diffusing reducible compound.

2. Recording material according to Claim 1, characterised in that it contains as the non-diffusing reducible compound at least one compound of the following formula:

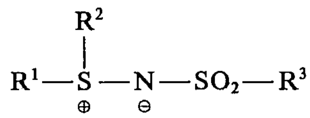

(I)

wherein

$R^1$ and $R^2$ denote identical or different aryl radicals, at least one of the aryl radicals containing at least one electron-attracting substituent in the o- or p-position and at least one of the aryl radicals containing a ballast group;
and
$R^3$ denotes the radical of a diffusible photographically active compound.

3. Recording material according to Claim 1, characterised in that the non-diffusing reducible compound corresponds to the following formula (II):

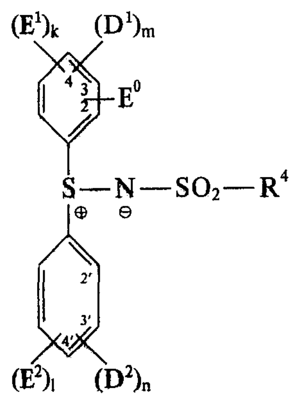

(II)

wherein

$E^0$ denotes $-NO_2$ in 2- or 4-position;
$E^1$ and $E^2$ denote electron-attracting substituents in 2- or 4- (or 2'- or 4'-) position;
$D^1$ and $D^2$ denote radicals conferring resistance to diffusion;
$R^4$ denotes the radical of a diffusible dye or dye precursor; and
k, l, m and n each denote 0 or 1, with the proviso that $m + n \geq 1$.

4. Recording material according to Claim 3, characterised in that $E^1$ and $E^2$ denote $-NO_2$, $-CF_3$, $-CN$, $-SO_2CF_3$, carbalkoxy, alkylsulphonyl, sulphamoyl or carbamoyl.

5. Recording material according to Claim 1, characterised in that the silver halide emulsion layer contains a negatively working silver halide emulsion and in that an electron donor compound or electron donor precursor compound which is in effective contact with the non-diffusing reducible compound is contained in said recording material.

6. Recording material according to Claim 5, characterised in that it contains as the electron donor precursor compound a benzofuranone derivative of the following general formula:

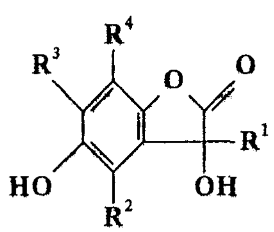

(III)

wherein

$R^1$ denotes a carbocyclic or heterocyclic aromatic radical;
$R^2$, $R^3$ and $R^4$ denote identical or different substituents, namely hydrogen, alkyl, alkenyl, aryl, alkoxy, alkylthio, amino or $R^3$ and $R^4$ together complete a fused carbocyclic ring, at least one of the substituents $R^1$, $R^2$, $R^3$ and $R^4$ containing a diffusion-impeding ballast group with 10 to 22 C atoms.

7. Recording material according to Claim 1, characteised in that it is made up as an integral instant colour picture unit and at least contains, in the following order:

a) a photosensitive recording element containing at least one photosensitive negative silver halide emulsion layer and associated therewith a non-diffusing reducible colour-providing sulphilimine compound;
b) an alkali-permeable light-reflecting layer and
c) an image-receiving layer.

8. Compound of the following formula

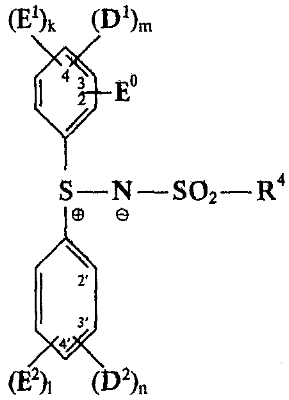

(II)

wherein

$E^0$ denotes $-NO_2$ in 2- or 4-position;
$E^1$ and $E^2$ denote electron-attracting substituents in 2- or 4- (or 2'- or 4'-) position;
$D^1$ and $D^2$ denote radicals conferring resistance to diffusion;
$R^4$ denotes the radical of a diffusible dye or dye precursor; and
k, l, m and n each denote 0 or 1, with the proviso that $m + n \geq 1$.

9. Compound of the formula

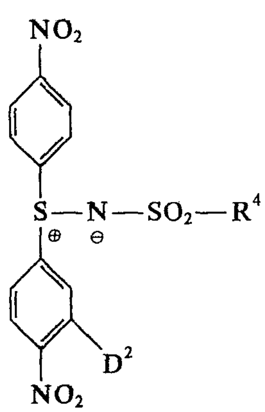

wherein

$D^2$ denotes a radical conferring resistance to diffusion and
$R^4$ denotes the radical of a diffusible dye or dye precursor.

10. Compound of the formula

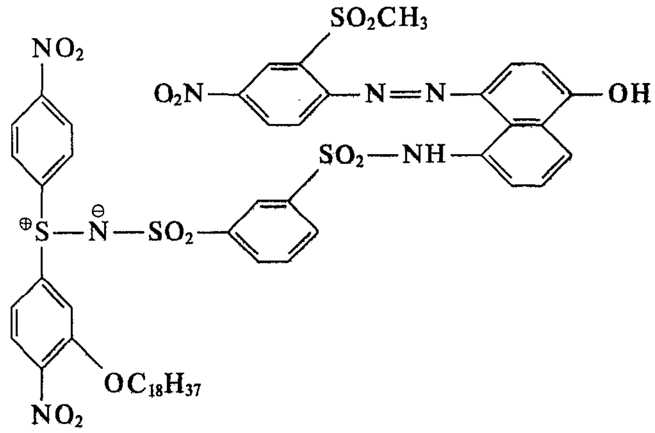

**Revendications**

1. Support photographique d'enregistrement comportant au moins une couche d'émulsion photosensible à l'halogénure d'argent comprenant un liant perméable aux alcalis et un composé réductible non diffusible en contact effectif avec cette couche, qui contient un groupe photographiquement actif, ce composé réductible pouvant libérer à l'état réduit dans les conditions alcalines de développement, le groupe photographiquement actif comme composé diffusible, caractérisé en ce qu'une sulfilimine est présente comme composé réductible non diffusible.

2. Support d'enregistrement suivant la revendication 1, caractérisé en ce qu'il contient comme composé réductible non diffusible au moins un composé de formule suivante:

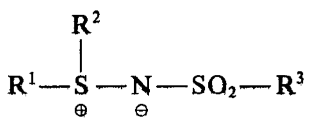

(I)

dans laquelle

$R_1$ et $R_2$ sont des restes aryle égaux ou différents, l'un au moins des restes aryle contenant au moins un substituant attirant les électrons, en position ortho ou para et l'un au moins des restes aryle contenant un groupe inerte;
et
$R^3$ est le reste d'un composé diffusible photographiquement actif.

3. Support d'enregistrement suivant la revendication 1, caractérisé en ce que le composé réductible non diffusible répond à la formule (II) suivante:

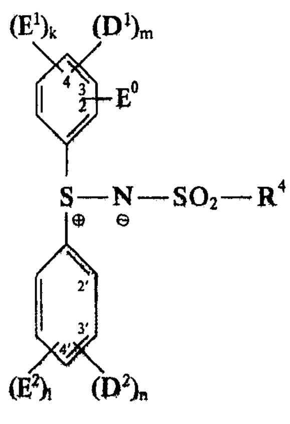

(II)

dans laquelle

$E^0$ est un groupe $-NO_2$ en postion 2 ou 4;
$E^1$ $E^2$ sont des substituants attirant les électrons en position 2 ou 4 (ou respectivement 2' ou 4');

| | |
|---|---|
| $D^1$, $D^2$ | sont des restes conférant le caractère non diffusible; |
| $R^4$ | est le reste d'un colorant ou d'un précurseur de colorant diffusible; et |
| k, l, m, n | sont chacun égaux à 0 à 1, sous réserve que la somme m + n soit supérieure ou égale à 1. |

4. Support d'enregistrement suivant la revendication 3, caractérisé en ce que $E^1$ et $E^2$ représentent un groupe $-NO_2$, $-CF_3$, $-CN$, $-SO_2CF_3$, carbalkoxy, alkylsulfonyle, sulfamoyle ou carbamoyle.

5. Support d'enregistrement suivant la revendication 1, caractérisé en ce que la couche d'émulsion à l'halogénure d'argent comprend une émulsion à l'halogénure d'argent travaillant négativement et un composé donneur d'électrons ou un composé précurseur de donneur d'électrons est présent en contact effectif avec le composé réductible non diffusible.

6. Support d'enregistrement suivant la revendication 5, caractérisé en ce qu'il comprend comme composé précurseur de donneur d'électrons un dérivé de benzofuranone de formule générale suivante:

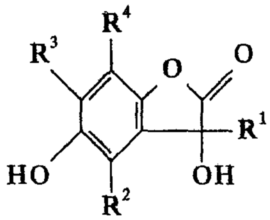

dans laquelle

| | |
|---|---|
| $R^1$ | est un reste aromatique carbocyclique ou hétérocyclique; |
| $R^2$, $R^3$, $R^4$ | représentent des substituants égaux ou différents, à savoir hydrogène, alkyle, alcényle, aryle, alkoxy, alkylthio, amino, ou bien $R^3$ et $R^4$ complètent ensemble un noyau carbocyclique condensé, et l'un au moins des substituants $R^1$, $R^2$, $R^3$ et $R^4$ comprend un reste inerte en C10 à C22 rendant la diffusion difficile. |

7. Support d'enregistrement suivant la revendication 1, caractérisé en ce qu'il est réalisé comme unité omtégrale pour image en couleurs instantanée et contient au moins, dans l'ordre suivant:

a) un élément d'enregistrement photosensible ayant au moins une couche d'émulsion négative photosensible à l'halogénure d'argent et un composé sulfiliminique chromogène réductible non diffusible associé à cette couche;
b) une couche photoréfléchissante perméable aux alcalis et
c) une couche de réception de l'image.

8. Composé de formule suivante:

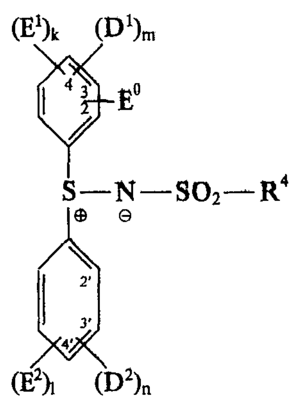

(II)

dans laquelle

| | |
|---|---|
| $E^0$ | représente un groupe $-NO_2$ en position 2 ou 4 |
| $E^1$, $E^2$ | sont des substituants attirant les électrons en position 2 ou 4 (ou respectivement en position 2' ou 4'); |
| $D^1$, $D^2$ | sont des restes conférant le caractère non diffusible; |
| $R^4$ | est le reste d'un colorant ou d'un précurseur de colorant diffusible; et |
| k, l, m, n | sont égaux chacun à 0 ou à 1 sous réserve que la somme m + n soit supérieure ou égale à 1. |

9. Composé de formule

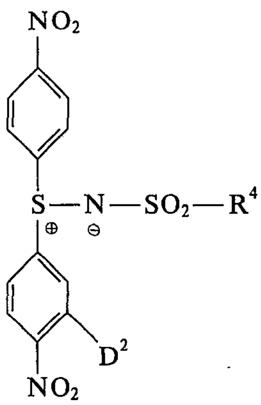

dans laquelle

$D^2$ est un reste conférant le caractère non diffusible et
$R^4$ est le reste d'un colorant ou d'un précurseur de colorant diffusible.

10. Composé de formule